(19) 

Europäisches
Patentamt
European
Patent Office
Office européen
des brevets

(11) **EP 4 693 444 A1**

(12) **EUROPEAN PATENT APPLICATION**
published in accordance with Art. 153(4) EPC

(43) Date of publication:
**11.02.2026 Bulletin 2026/07**

(21) Application number: **24781077.3**

(22) Date of filing: **18.03.2024**

(51) International Patent Classification (IPC):
**H01M 4/133** (2010.01)    **H01M 4/134** (2010.01)
**H01M 4/36** (2006.01)    **H01M 4/583** (2010.01)
**H01M 4/48** (2010.01)    **H01M 4/62** (2006.01)
**H01M 4/04** (2006.01)    **H01M 4/02** (2006.01)

(52) Cooperative Patent Classification (CPC):
**H01M 4/623; H01M 4/131; H01M 4/133;**
**H01M 4/134; H01M 4/364; H01M 4/366;**
**H01M 4/386; H01M 4/483; H01M 4/485;**
**H01M 4/583; H01M 4/587; H01M 4/62;**
**H01M 4/625; H01M 4/663; H01M 10/052;**    (Cont.)

(86) International application number:
**PCT/KR2024/003348**

(87) International publication number:
**WO 2024/205086 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.03.2023   KR 20230039342
24.04.2023   KR 20230053305**

(71) Applicant: **SAMSUNG SDI CO., LTD.
Yongin-si, Gyeonggi-do 17084 (KR)**

(72) Inventors:
• **SON, In Hyuk**
**Yongin-Si Gyeonggi-do 17084 (KR)**
• **JO, Sung Nim**
**Yongin-Si Gyeonggi-do 17084 (KR)**
• **SHIM, Kyu Eun**
**Yongin-Si Gyeonggi-do 17084 (KR)**
• **PARK, Jin Hwan**
**Yongin-Si Gyeonggi-do 17084 (KR)**

(74) Representative: **Michalski Hüttermann & Partner
Patentanwälte mbB
Kaistraße 16A
40221 Düsseldorf (DE)**

(54) **DRY NEGATIVE ELECTRODE FILM, AND DRY NEGATIVE ELECTRODE AND LITHIUM BATTERY COMPRISING SAME**

(57)   Provided are dry negative electrode film, and a dry negative electrode and a lithium battery comprising same, the dry negative electrode film comprising dry negative electrode active material, and a dry binder. The dry negative electrode active material contains composite negative electrode active material comprising cores, and shells on the surface of the cores. Each core comprises carbon-based material, a mixture of carbon- and silicon-based material, a composite of carbon- and silicon-based material, or a combination thereof. Each shell contains a composite of one or more types of first metal oxide and first carbon-based material. The first metal oxide is in a carbon-based material matrix and is expressed by the chemical formula $M_aO_b$ (0<a≤3, 0<b<4, and when a is 1, 2, or 3, b is not an integer) where M is at least one metal selected from Groups 2 to 16 in the periodic table.

FIG. 1

100
10
21
22
20

EP 4 693 444 A1

(52) Cooperative Patent Classification (CPC): (Cont.)
**H01M 10/0525;** H01M 2004/021; H01M 2004/027;
Y02E 60/10

## Description

### Technical Field

One or more embodiments relate to a dry anode film, and a dry anode and a lithium battery, which include the same.

### Background Art

In order to meet the requirements of miniaturization and high performance of various devices, high energy density in addition to miniaturization and reduced weight of lithium batteries has become important. In other words, high-capacity lithium batteries are becoming important.

An electrode manufactured from a slurry including a solvent uses an excessive amount of solvent during manufacturing of the electrode. Therefore, a dry method that excludes the use of such an organic solvent is being studied.

### Disclosure of Invention

### Technical Problem

One or more embodiments include a new dry anode film having improved cycle characteristics by reducing internal resistance and improving mechanical strength.

One or more embodiments include a dry anode including the dry anode film.

One or more embodiments include a lithium battery including the dry anode.

### Solution to Problem

According to one or more embodiments,
a dry anode film includes a dry anode active material and a dry binder, wherein the dry anode active material includes a composite anode active material including a core and a shell disposed along a surface of the core, wherein the core includes a carbon-based material, a mixture of a carbon-based material and a silicon-based active material, a composite of a carbon-based material and a silicon-based active material, or a combination thereof, the shell includes a composite including at least one first metal oxide and a first carbon-based material, the first metal oxide is disposed within a matrix of the first carbon-based material, the first metal oxide is represented by formula $M_aO_b$ ($0<a\leq3$ and $0<b<4$ where if $a$ is 1, 2, or 3, $b$ is not an integer), and M is at least one metal selected from Group 2 to Group 16 of the Periodic Table of the Elements.

According to one or more embodiments, a dry anode includes an anode current collector, and the dry anode film disposed on one side or opposite sides of the anode current collector.

The anode current collector includes a substrate and an interlayer disposed between the substrate and the dry anode film, wherein the interlayer includes a carbon-based conductive material.

According to one or more embodiments, a lithium battery includes a cathode, an anode, and an electrolyte disposed between the cathode and the anode, wherein

the anode is the dry anode, and
the electrolyte includes a liquid electrolyte, a solid electrolyte, a gel electrolyte, or a combination thereof.

### Advantageous Effects of Invention

According to one aspect, the internal resistance of a dry anode film is reduced and the mechanical properties thereof are improved, thereby improving the initial efficiency and cycle characteristics of a lithium battery using the dry anode film.

### Brief Description of Drawings

FIG. 1 is a schematic cross-sectional view of a dry anode active material according to embodiments;

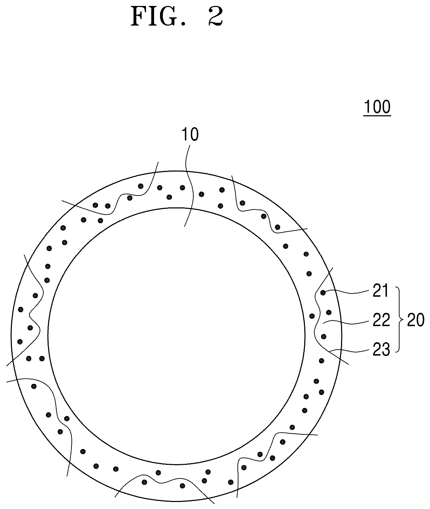

FIG. 2 is a schematic cross-sectional view of a dry anode active material according to embodiments;
FIG. 3A illustrates the structure of a dry anode-separator subassembly according to embodiments;
FIG. 3B shows the structure of a dry anode-separator subassembly according to embodiments;

FIG. 4A is a cross-sectional view showing a stacked structure of a dry anode for a lithium battery according to embodiments;

FIG. 4B is a cross-sectional view showing a stacked structure of a dry anode for a lithium battery, according to embodiments;

FIG. 4C is a cross-sectional view showing a stacked structure of a dry anode for a lithium battery, according to embodiments;

FIG. 5 shows a schematic diagram of a lithium battery according to embodiments;

FIG. 6 shows a schematic diagram of a lithium battery according to embodiments; and

FIG. 7 shows a schematic diagram of a lithium battery according to embodiments.

## List of Reference Numerals for Major Elements

1 lithium battery 2 anode
3 cathode 4 separator
5 battery case 6 cap assembly
7 battery structure 8 electrode tab
10 core 20 shell
21 first metal oxide 22 first carbon-based material
23 second carbon-based material 100 dry anode active material

## Best Mode for Carrying out the Invention

The present inventive concepts now will be described more fully hereinafter with reference to the accompanying drawings, in which example embodiments are shown. These inventive concepts may, however, be embodied in many different forms and should not be construed as limited to the example embodiments set forth herein. Rather, these example embodiments are provided so that this disclosure will be thorough and complete, and will fully convey the scope of the inventive concepts to those skilled in the art. In the drawings, like numbers refer to like elements throughout.

It will also be understood that when an element is referred to as being "on" or "over" another element, it may be directly on the other element or intervening elements may also be present. In contrast, when an element is referred to as being "directly on" or "directly over" another element, there are no intervening elements present.

It will be understood that, although the terms first, second, third, etc. may be used herein to describe various elements, components, regions, layers, and/or sections, these elements, components, regions, layers, and/or sections should not be limited by these terms. These terms are only used to distinguish one element, component, region, layer, or section, from another element, component, region, layer, or section. For example, a first element, component, region, layer, or section could be termed a second element, component, region, layer, or section, without departing from the teachings of the disclosure.

The terminology used herein is for the purpose of describing particular embodiments only and is not intended to be limiting of the present inventive concept. As used herein, the singular forms "a", "an" and "the" are intended to include the plural forms as well including "at least one", unless the context clearly indicates otherwise. The term "at least one" should not be interpreted as being limited to a singular form. As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms such as "under", "below", "lower portion", "on", "above", "upper portion", etc., may be used herein to facilitate the description of the relationship of one component or feature with respect to another component or feature. It will be understood that spatially relative terms are intended to include different orientations of a device in use or operation in addition to the orientations shown in the figures. For example, when a device in the drawings is turned over, elements described as "under" or "below" other elements or features will be oriented "above" the other elements or features. Thus, the exemplary term "below" may encompass both directions of up and down. The device may be positioned in other orientations (rotated 90 degrees or rotated in other directions) and the spatially relative terms used herein may be interpreted accordingly.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the specification and the relevant art and should not be interpreted in an idealized sense or overly formal sense unless expressly so defined herein.

Exemplary implementations are described herein with reference to cross-sectional views that are schematic diagrams of idealized implementations. As such, variations from the illustrated shape should be expected as a result of, for example, manufacturing techniques and/or tolerances. Thus, the embodiments described herein should not be construed as being limited to the specific shapes of regions as shown herein, but should include deviations in shapes resulting, for example, from manufacturing. For example, regions shown or described as being flat may typically be rough and/or have non-linear features. Moreover, the sharpened angles may be round. Accordingly, the regions depicted in the drawings are schematic in nature and the shapes are not intended to depict the exact shape of the region and are not intended to limit the scope of the claims.

"Group" refers to a group in the Periodic Table of the Elements according to the 1-18 Group numbering system by the International Union of Pure and Applied Chemistry ("IUPAC").

The term "dry" used herein refers to a condition in which proper operation is not achievable even when in contact with or without a solvent such as a process solvent. For example, a dry conductive material refers to a conductive material that operates properly without contact with a solvent, or a conductive material that does not contain a solvent. For example, a dry binder refers to a conductive material that operates properly without contact with a solvent, or a binder that does not contain a solvent, etc. For example, a binder that is not mixed with a solvent and is in a liquid state at room temperature may be considered a dry binder.

The "particle diameter" of a particle used herein refers to the average diameter when the particle is spherical, and refers to the average length of the major axis when the particle is non-spherical." The particle diameter may be measured using a particle size analyzer (PSA). The term "particle diameter" may refer to an average particle diameter, for example. The term "average particle diameter" may refer to, for example, a median particle diameter (D50).

D50 may refer to a particle size corresponding to a cumulative volume of 50 % as calculated from the smallest particle size in a particle size distribution measured by a laser diffraction method.

D90 may refer to a particle size corresponding to a cumulative volume of 90 % as calculated from the smallest particle size in a particle size distribution measured by a laser diffraction method.

D10 may refer to a particle size corresponding to a cumulative volume of 10 % as calculated from the smallest particle size in a particle size distribution measured by a laser diffraction method.

The average particle diameter (D50) may be measured by methods suitable for those skilled in the art, for example, by a particle size analyzer, transmission electron microscopy images, scanning electron microscopy, or field emission scanning electron microscopy (FE-SEM). In some embodiments, data analysis is performed using a dynamic light scattering measurement device, and the number of particles is counted by particle size range, and the average particle diameter (D50) value may be easily obtained by: calculation. In the present disclosure, "diameter" refers to particle diameter or average particle diameter when the particle is spherical, and "diameter" refers to major axis length or average major axis length when the particle is spherical.

As used herein, the term "metal" refers to both metals and metalloids such as silicon and germanium, in an elemental or ionic state.

As used herein, the term "alloy" means a mixture of two or more metals.

The term "electrode active material" as used herein refers to an electrode material that may undergo lithiation and de-lithiation.

As used herein, the term "cathode active material" refers to a cathode material capable of undergoing lithiation and delithiation.

As used herein, the term "anode active material" refers to an anode material capable of undergoing lithiation and delithiation.

The terms "lithiation" and "to lithiate" as used herein refer to a process of adding lithium to an electrode active material.

The terms "delithiation" and "to delithiate" as used herein refer to a process of removing lithium from an electrode active material.

As used herein, the terms "charging" and "charge" refer to a process of providing electrochemical energy to a battery.

As used herein, the terms "discharging" and "discharge" refer to a process of removing electrochemical energy from a battery.

The terms "cathode" used herein refer to an electrode at which electrochemical reduction and lithiation occur during the discharging process.

The terms "anode" used herein refer to an electrode at which electrochemical reduction and delithiation occur during the discharging process.

While specific examples and are described herein, there may be alternatives, modifications, variations, improvements, and substantial equivalents of the examples disclosed herein, including those that are not presently unforeseen or unappreciated, may arise from applicants or those skilled in the art. Accordingly, the appended claims as filed and as they may be amended are intended to embrace all such alternatives, modifications, variations, improvements and substantial equivalents.

Hereinafter, a dry anode film and a dry anode and a lithium battery, each of which includes the same, according to embodiments will be described in more detail.

If an active material, a conductive material, and a binder are mixed by using a dry method so as to prepare an anode as a dry anode, while the conductive material of nanoparticles is bound to the binder, the binder with which the conductive material is excessively aggregated is bound to the active material. As a result, the mixing state of the active material, the conductive material, and the binder may not be uniform, so that the resistance of the anode may be high and the tensile strength may be low. By solving these problems in the manufacturing process of dry electrode plates, a dry anode film in which the binder and the conductive material are uniformly bonded to the surface of the active material may be provided, resulting in a dry anode film having an improved resistance reduction effect as well as an improved tensile strength, and a dry anode and a lithium battery thereof.

A dry anode film according to embodiments includes a dry anode active material and a dry binder, wherein the dry anode active material includes a core and a shell disposed along a surface of the core, wherein the core includes a carbon-based material, a mixture of a carbon-based material and a silicon-based active material, a composite of a carbon-based material and a silicon-based active material, or a combination thereof, the shell includes a composite including at least one first metal oxide and a first carbon-based material, the first metal oxide is disposed within a matrix of the first carbon-based material, the first metal oxide is represented by formula $M_aO_b$ ($0<a\leq3$ and $0<b<4$ where if a is 1, 2, or 3, b is not an integer), and M is at least one metal selected from Group 2 to Group 16 of the Periodic Table of the Elements.

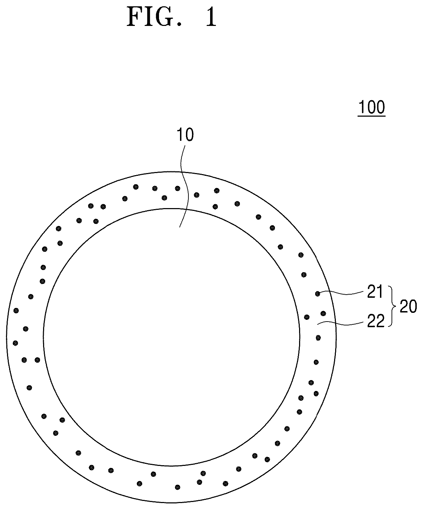

Referring to FIG. 1, a dry anode active material 100 includes a core 10 and a shell 20 continuously or discontinuously disposed over the surface of the core 10.

The core 10 may include: a carbon-based material; a mixture of a carbon-based material and a silicon-based active material; a composite of a carbon-based material and a silicon-based active material; or a combination thereof, and the shell 20 may cover all or part of the core 10.

The shell 20 may include a first metal oxide 21 and a first carbon-based material 22. The dry anode active material may be, for example, an electrode active material that is not impregnated, dissolved, or dispersed in a processing solvent in the process of manufacturing a dry anode film.

As the dry anode active material has a core/shell structure and the shell includes the first carbon-based material, the dry anode active material and the dry binder may be more uniformly mixed. Therefore, the aggregation of the dry binder in the dry anode film may be suppressed and the dry binder may be uniformly distributed in three dimensions. By suppressing the local resistance region within the dry anode film, the current density imbalance may be reduced and the overall internal resistance of the electrolytic electrode film may be reduced.

As the dry anode active material has a core/shell structure and the shell includes the first carbon-based material, interface resistance between the dry anode active material and the dry anode active material may be reduced. As the dry anode active material has a core/shell structure and the shell includes the first carbon-based material, the internal resistance of the dry anode film may be reduced. As the dry anode active material has a core/shell structure and the shell includes the first carbon-based material, the binding force of the dry anode active material and the dry binder may be improved. As the dry composite anode active material has a core/shell structure and the shell includes the first carbon-based material, mechanical properties such as tensile strength of the dry anode film may be improved. As the internal resistance of the dry anode film is reduced and mechanical properties thereof are improved, cycle characteristics of a lithium battery including such a dry anode film may be improved.

As the shell includes the first metal oxide, ion conductivity thereof may be improved compared to a shell made of a carbon-based material, and as a result, ion conductivity of the dry anode active material may be improved.

The dry anode active material has a core/shell structure, and the shell may be continuously or discontinuously disposed along the surface of the core. As the shell includes the first metal oxide disposed in a first carbon-based material matrix, the shell may be more uniformly disposed on the core. In some embodiments, due to the introduction of the composite including a first metal oxide disposed in a matrix of the first carbon-based material onto the core, the dry anode active material may be less agglomerated and more uniformly disposed on the core. Due to the effective blocking of the contact between the core and an electrolyte by the shell uniformly disposed on the core, side reactions by the contact between the core and the electrolyte may be prevented. In some embodiments, as cation mixing due to the contact between the core and the electrolyte is suppressed, the formation of a resistive layer on the surface of the core may be inhibited. Furthermore, as the shell is introduced on the core, elution of transition metal ions from the core including a transition metal may be inhibited. The first carbon-based material may be, for example, a crystalline carbon-based material. The first carbon-based material may be, for example, a carbon-based nanostructure. The first carbon-based material may be, for example, a carbon-based two-dimensional nanostructure. The first carbon-based material may be, for example, graphene. For example, the shell including graphene and/or the matrix thereof has flexibility, allowing for easy accommodation of volume changes of the dry anode active material during charging and discharging, thereby preventing the occurrence of cracks inside the dry anode active material. As graphene has high electronic conductivity, interface resistance between the dry anode active material and the electrolyte may be reduced. Despite the introduction of a graphene-containing shell, the increase in the internal resistance of the lithium battery may be suppressed. In some embodiments, carbon-based materials of the art that do not include a first metal oxide are easily agglomerated, making it difficult to uniformly distribute the same on the core of the dry anode active material. In some embodiments, as the matrix of the first carbon-based material is derived from, for example, the graphene matrix, the density thereof is relatively low density and high porosity compared to carbon-based materials of the art derived from graphite-based materials.

The dry anode active material has a core/shell structure. The shell may include a first metal oxide, and metal included in the first metal oxide may be, for example, at least one selected from Al, Nb, Mg, Sc, Ti, Zr, V, W, Mn, Fe, Co, Pd, Cu, Ag, Zn, Sb, and Se. The first metal oxide may be, for example, at least one selected from among $Al_2O_z(0<z<3)$, $NbO_x$ $(0<x<2.5)$, $MgO_x(0<x<1)$, $Sc_2O_z(0<z<3)$, $TiO_y(0<y<2)$, $ZrO_y(0<y<2)$, $V_2O_z(0<z<3)$, $WO_y(0<y<2)$, $MnO_y(0<y<2)$, $Fe_2O_z$ $(0<z<3)$, $Co_3O_w(0<w<4)$, $PdO_x(0<x<1)$, $CuO_x(0<x<1)$, $AgO_x(0<x<1)$, $ZnO_x(0<x<1)$, $Sb_2O_z(0<z<3)$, and $SeO_y(0<y<2)$. As the first metal oxide is disposed in the matrix of the first carbon-based material, uniformity of the shell disposed on the core is improved, and high-voltage resistance of the dry anode active material may be further improved. The shell may include, for example, $Al_2O_x$ $(0<x<3)$ as the first metal oxide.

The shell may further include one or more second metal oxides. The second metal oxide may be represented by, for example, the formula $M_aO_c$ $(0<a≤3, 0<c≤4$, where if a is 1, 2, or 3, c is an integer), wherein M is at least one metal selected from Group 2 to Group 13, Group 15, and Group 16 of the Periodic Table of the Elements. The second metal oxide may include, for example, the same metal as the first metal oxide. The ratio of c to a of the second metal oxide, c/a, may have a greater value than the ratio of b to a of the first metal oxide, b/a. For example, c/a > b/a may be satisfied. The second metal oxide may be disposed within the matrix of the first carbon-based material. In some embodiments, the second metal oxide may be selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be, for example, a reduction product of the second metal oxide. The first metal oxide may be obtained from a partial or complete reduction of the second metal oxide. Therefore, the first metal oxide may have a lower amount of oxygen and a lower metal oxidation number than the second metal oxide. For example, the shell may include the first metal oxide, $Al_2O_x$ $(0<x<3)$ and the second metal oxide, $Al_2O_3$.

The shell may include, for example, at least one selected from among the first metal oxide and the second metal oxide, and the particle diameter of at least one selected from the first metal oxide and the second metal oxide may be, for example, about 0.1 nm to about 100 nm, about 0.5 nm to about 100 nm, about 1 nm to about 100 nm, about 1 nm to about 50 nm, about 1 nm to about 30 nm, about 5 nm to about 30 nm, or about 10 nm to about 30 nm. Within these nanoranges of particle diameters of the first metal oxide and/or the second carbon-based material, the uniform distribution may be obtained in the matrix of the first carbon-based material. If the particle diameter of at least one of the first metal oxide and the second metal oxide excessively increases, the thickness of the shell may be increased and thus the internal resistance of the composite anode active material may be increased. If the particle diameter of at least one of the first metal oxide and the second metal oxide is excessively reduced, uniform dispersion may not be obtained.

The shell may include the first metal oxide and/or the second metal oxide, and may include the first carbon-based material. The first carbon-based material may be disposed in a direction protruding from the surface of the first metal oxide and/or the second metal oxide. The first carbon-based material may be disposed in a direction protruding from the surface of the first metal oxide and/or second metal oxide by directly growing from the surface of the first metal oxide and/or the second metal oxide. The first carbon-based material disposed in a direction protruding from the surface of the first metal oxide and/or the second metal oxide may be, for example, a carbon-based two-dimensional nanostructure, a carbon-based flake, or graphene.

The thickness of the shell may be, for example, 5 $\mu$m or less, about 0.1 nm to about 5 $\mu$m, about 0.5 nm to about 5 $\mu$m, about 1 nm to about 5 $\mu$m, about 1 nm to about 1 $\mu$m, about 1 nm to about 500 nm, about 1 nm to about 200 nm, about 1 nm to about 100 nm, about 1 nm to about 50 nm, about 1 nm to about 30 nm, or about 1 nm to about 20 nm. If the shell has these ranges of thickness, the electronic conductivity of a dry anode including the dry anode active material may be further improved and the internal resistance thereof may be further reduced.

The shell may have a single-layer structure or a multi-layer structure. The multi-layer structure may have, for example, a two-layer structure, a three-layer structure, or a four-layer structure. In a multi-layer structure, for example, the type of metal of the first metal oxide included in each layer may be different.

In some embodiments, the content of the shell may be, based on the total weight of the dry anode active material, 5 wt% or less, about 0.01 wt% to about 5 wt%, about 0.01 wt% to about 3 wt%, about 0.01 wt% to about 2 wt%, or about 0.01 wt% to about 1 wt%. In some embodiments, the content of the first metal oxide may be, based on the total weight of the dry anode active material, 3 wt% or less, about 0.006 wt% to about 3 wt%, about 0.06 wt% to about 1.8 wt%, about 0.006 wt% to about 1.2 wt%, or about 0.006 wt% to about 0.6 wt%. If the dry anode active material includes such ranges of the shell and the first metal oxide, the cycle characteristics of the lithium battery may be further improved.

The shell disposed along the surface of the core may be, for example, a dry coating layer. The shell may be introduced onto the core by a dry method, for example, by milling. In some embodiments, the shell disposed over the surface of the core may include at least one selected from: a composite including a first metal oxide, and a first carbon-based material, for example, graphene; and a milling product of the composite. The first metal oxide may be disposed within the matrix of the first carbon-based material, for example, a graphene matrix.

In some embodiments, the shell may be prepared from a composite including a first metal oxide, and a first carbon-based material, for example, graphene. The composite may further include a second metal oxide in addition to the first metal oxide. For example, the composite may include two or more types of first metal oxides. For example, the composite may include two or more types of first metal oxides and two or more types of second metal oxides.

The composite may include at least one selected from the first metal oxide and the second metal oxide. The particle diameter of at least one selected from the first metal oxide and the second metal oxide may be about 0.1 nm to about 100 nm, about 0.5 nm to about 100 nm, about 1 nm to about 100 nm, about 1 nm to about 50 nm, about 1 nm to about 30 nm, about 5 nm to about 30 nm, or about 10 nm to about 30 nm. Within these nanoranges of the particle diameters of the first metal oxide and/or the second carbon-based material, the uniform distribution may be obtained in the matrix of the first carbon-based material of the composite. Therefore, the composite may be uniformly coated on the core without aggregation to form a shell. In some embodiments, the first metal oxide and/or the second metal oxide due to having a particle diameter in the above ranges may be more uniformly disposed on the core. Due to uniform disposition of the first metal oxide and/or the second metal oxide on the core, withstand voltage characteristics may be more effectively achieved withstand voltage characteristics. The particle diameters of the first metal oxide and/or the second metal oxide may be measured by using, for example, a laser diffraction method or a measuring device using a dynamic light scattering method. The particle diameter is the value of the median particle diameter (D50) if 50 % of the cumulative volume is reached starting from the smallest particle size, and it may be measured, for example, using a laser scattering particle size analyzer (such as Horiba LA-920) and converting the data to volume. A deviation of uniformity of at least one selected from the first metal oxide and/or the second metal oxide may be 3 % or less, 2 % or less, or 1 % or less.

Uniformity may be measured, for example, by X-ray photoelectron spectroscopy (XPS). Therefore, at least one selected from the first metal oxide and the second metal oxide may be uniformly distributed in the composite, while having a variation of 3 % or less, 2 % or less, or 1 % or less.

The dry anode active material may include a core, and the core may include, for example, a carbon-based material; a mixture of a carbon-based material and a silicon-based active material; a composite of a carbon-based material and a silicon-based active material; or a combination thereof.

The content of the silicon-based active material in the mixture of the carbon-based material and the silicon-based active material or the composite of the carbon-based material and the silicon-based active material, may be about 5 wt% to about 20 wt%, about 7 wt% to about 18 wt%, about 10 wt% to about 17 wt%, or about 10 wt% to about 15 wt%, based on 10 wt% of the total weight of the mixture of the carbon-based material and the silicon-based active material or the composite of the carbon-based material and the silicon-based active material.

The carbon-based material may be crystalline carbon, amorphous carbon, or a combination thereof, the crystalline carbon may be at least one selected from natural graphite, artificial graphite, graphene, fullerene, and carbon nanotube, and the amorphous carbon may be at least one selected from soft carbon, hard carbon, mesophase pitch carbide, calcined coke, and carbon fiber.

The precursor of the amorphous carbon may be coal-based pitch, mesophase pitch, petroleum-based pitch, coal-based oil, petroleum-based heavy oil, or a polymer resin such as a phenol resin, a furan resin, or a polyimide resin.

The silicon-based active material may be a Si alloy, a silicon-containing structure, a silicon-containing compound, or a combination thereof.

The silicon-containing compound may be $SiO_2$, SiOx (0<x<2), SiC, or a combination thereof, and the silicon-containing structure includes a silicon composite structure.

According to embodiments, the silicon composite structure may be a silicon-carbon composite.

The silicon-carbon composite may be: a silicon-carbon composite including silicon particles and a first carbon-based material; a silicon-carbon composite including a core in which silicon particles and a second carbon-based material are mixed, and a third carbon-based material surrounding the core; or a combination thereof.

The first carbon-based material to the third carbon-based material may each independently be crystalline carbon, amorphous carbon, or a combination thereof. The silicon-carbon composite includes a core including silicon particles and crystalline carbon and an amorphous carbon coating layer positioned on the surface of the core.

If the silicon-carbon composite is used as a silicon-based active material, the secondary battery may implement stable cycle characteristics while exhibiting high capacity.

In the silicon-carbon composite including the silicon particles and the first carbon-based material, the content of the silicon particles may be about 30 wt% to about 70 wt%, about 30 wt% to about 60 wt%, for example, about 40 wt% to about 50 wt%. In some embodiments, the silicon-based active material may include a silicon-carbon composite including a core in which silicon particles and a second carbon-based material are mixed and a third carbon-based material surrounding the core. If such a silicon-carbon composite is used, a very high capacity of a secondary battery may be obtained, and a capacity retention ratio and hightemperature lifetime characteristics thereof may be improved. The average particle diameter (D50) used herein refers to the diameter of particles whose cumulative volume is 50 % by volume in the particle size distribution.

In some embodiments, based on 100 wt% of the silicon-carbon composite, the third carbon-based material may be included in an amount of about 1 wt% to about 50 wt%, and the silicon particles may be included in an amount of about 30 wt% to about 70 wt%. The second carbon-based material may be included from about 20 wt% to about 69 wt%. If the contents of the silicon particles, the third carbon-based material, and the second carbon-based material are included in these ranges, the discharge capacity of the secondary battery is excellent and the capacity retention ratio is improved.

The particle diameter of the silicon particles may be about 10 nm to about 30 $\mu$m, for example, about 10 nm to about 1000 nm, or about 20 nm to about 150 nm. If the average particle diameter of the silicon particles is included in these ranges, the volume expansion that occurs during charge and discharge may be suppressed, and the interruption of the transfer of electrons by fracturing of the particles during charge and discharge may be prevented.

In the silicon-carbon composite, for example, the second carbon-based material may be crystalline carbon and the third carbon-based material may be amorphous carbon. The silicon-carbon composite may be a silicon-carbon composite including a core including silicon particles and crystalline carbon, and an amorphous carbon coating layer positioned on the surface of the core.

The silicon-carbon composite may be, for example, a silicon-carbon nanocomposite. A silicon-carbon nanocomposite refers to a composite in which at least one of silicon and carbon has a nanoscale size of less than 1 $\mu$m. For example, the silicon-carbon nanocomposite may be a composite of silicon nanoparticles and carbon nanoparticles.

In some embodiments, the silicon-containing compound may include silicon, silicon alloy, silicon oxide, silicon nitride, silicon nitride, silicon carbide, or a combination thereof. The silicon-containing compound may include, for example, $SiO_x$ (0 <x<2).

Silicon alloys may include: silicon; and an element selected from alkali metals, alkaline earth metals, Groups 13 to 16 elements, transition metals, rare earth elements, or a combination thereof. The element may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

According to embodiments, the silicon composite structure may include: porous silicon secondary particles; and first carbon flakes disposed on the porous silicon secondary particles, wherein the porous silicon secondary particles are an aggregate of a plurality of silicon composite primary particles, and the silicon composite primary particles include: silicon; silicon dioxide $SiO_2$ and/or silicon suboxide ($SiO_x$, 0 disposed on the silicon <x<2); and a second carbon flake disposed on the silicon dioxide $SiO_2$ and/or the silicon suboxide.

The silicon composite structure may include porous silicon secondary particles including an agglomerate of a plurality of silicon composite primary particles and first carbon flakes disposed on the porous silicon secondary particles. In some embodiments, the first carbon flake disposed on the porous silicon secondary particles may be disposed to cover at least one surface of the porous silicon secondary particles. The first carbon flakes may be directly disposed on the porous silicon secondary particles. The first carbon flakes may be grown directly on the silicon suboxide of the porous silicon secondary particles. The first carbon flakes may be grown directly from the surface of the porous silicon secondary particles and directly deposited on the surface of the porous silicon secondary particles. The first carbon flake may entirely or partially cover the surface of the porous silicon secondary particles. The coverage ratio of the first carbon flakes may be, for example, about 5 % to about 100 %, about 10 % to about 99%, about 20 % to about 95%, or about 40 % to about 90 % based on the total surface area of the porous silicon secondary particles. The carbon of the first carbon flake exists on the surface of the porous silicon secondary particles and effectively buffers the volume change of the porous silicon secondary particles. The size of the porous silicon secondary particles may be, for example, about 1 $\mu$m to about 20 $\mu$m, about 2 $\mu$m to about 18 $\mu$m, or about 3 $\mu$m to about 10 $\mu$m. The size of the first carbon flakes may be, for example, about 1 nm to about 200 nm, about 5 nm to about 150 nm, or about 10 nm to about 100 nm. In some embodiments, the size refers to a diameter or the length of a major axis.

The silicon composite primary particles may include: silicon; silicon suboxide ($SiO_x$, 0<x<2) disposed on at least one surface of silicon; and a second carbon flake disposed on one surface of the silicon suboxide. Silicon may be, for example, plate-shaped, needle-shaped, spherical, or a combination thereof. Silicon is not limited in the shape thereof, and the shape thereof may be, for example, spheres, nanowires, needles, rods, particles, nanotubes, nanorods, wafers, and nanoribbons, or a combination thereof. The average size of the silicon may be, for example, about 10 nm to about 1 $\mu$m, about 10 nm to about 500 nm, about 20 nm to about 150 nm, or 100 nm. The average size of silicon refers to an average particle diameter if the silicon is a spherical particle; and refers to the length of a major axis, a length, or a thickness if the silicon is a non-spherical particle, for example, a plate-shaped particle or a needle-shaped particle. Silicon suboxide (SiOx) disposed on silicon in the silicon composite primary particles (0 <x<2) may be disposed to cover at least one side of the silicon. The silicon suboxide may be disposed directly on silicon. The silicon suboxide may entirely or partially cover the surface of the silicon. The coverage ratio of silicon suboxide may be, for example, about 1 % to about 100%, about 5 % to about 99 %, about 10 % to about 95 %, or about 20 % to about 90 %, based on the total surface area of silicon. A second carbon flake disposed on the silicon suboxide may be disposed to cover at least one surface of the silicon suboxide. The second carbon flake may be disposed directly on the silicon suboxide. A second carbon flake may be grown directly from the surface of the silicon suboxide and disposed directly on the surface of the silicon suboxide. In some embodiments, the second carbon flake may completely or partially cover the surface of silicon suboxide. The coverage of the second carbon flake may be, for example, about 10 % to about 100%, about 10 % to about 99%, about 20 % to about 95%, or about 40 % to about 90%, based on the total surface area of the silicon suboxide. Carbon in the second carbon flake exists on the surface of silicon and/or silicon suboxide and may effectively buffer the volume change of silicon composite primary particles. The size of the second carbon flakes may be, for example, about 1 nm to about 200 nm, about 5 nm to about 150 nm, or about 10 nm to about 100 nm. In some embodiments, the size refers to a diameter or the length of a major axis.

The silicon composite structure may include porous silicon secondary particles and a second carbon flake disposed on the porous silicon secondary particles. The second carbon flake may be disposed to entirely or partially cover the porous silicon secondary particles. For example, the second carbon flake may be disposed to entirely or partially surround the porous silicon secondary particles. In porous silicon secondary particles, first carbon flakes may be disposed on silicon composite primary particles. During volume expansion/contraction of the silicon composite structure, silicon included in the porous silicon secondary particles may maintain contact with the first carbon flake and/or the second carbon flake. As the porous secondary particle includes pores, it can act as an internal buffer space during volume expansion/-contraction of the silicon composite structure. Therefore, unlike the silicon-based anode active material of the related art, the silicon composite structure may suppress an increase in internal resistance while effectively accommodating the volume change of the silicon composite structure during charging and discharging.

The porosity of the silicon composite structure may be, for example, 60 % or less, for example, about 30 % to about 60 %. In some embodiments, the silicon composite structure may be non-porous. The non-porous structure may have, for example, a porosity of 10 % or less, or 5 % or less. The non-porous structure may have, for example, a porosity of about 0.01 % to about 5 %, or 0 %. Porosity may be measured by mercury porosimetry or nitrogen adsorption.

The silicon composite structure may have, for example, a non-spherical shape. The degree of sphericity of the silicon composite structure may be, for example, 0.9 or less. The degree of sphericity of the silicon composite structure may be, for example, about 0.7 to about 0.9, about 0.8 to about 0.9, or about 0.85 to about 0.9. Circularity may be determined by, for example, $4\pi A/P^2$ (A is the area and P is the perimeter).

The silicon composite structure may include a first carbon flake and a second carbon flake. The first carbon flake and the second carbon flake may be, for example, identical carbon flakes. The first carbon flake and the second carbon flake may be any carbon-based material that has a flake shape. The first carbon flake and the second carbon flake may independently be graphene, graphite, carbon fiber, graphitic carbon, graphene oxide, or a mixture thereof. The porous composite structure may include, for example, first graphene and second graphene as the first carbon flake and the second carbon flake. The first graphene and the second graphene may each have a structure such as a nanosheet, a layer (film), or a flake. A nanosheet refers to a shape formed in an irregular state on silicon suboxide or porous silicon secondary particles with a thickness of about 1000 nm or less, for example, about 1 nm to about 1000 nm. A film refers to a form continuously and uniformly formed on silicon suboxide or porous silicon secondary particles.

The silicon-containing structure may further include a carbon-based coating layer disposed on the silicon composite structure. The carbon-based coating layer may improve the physical stability of the silicon composite structure and more effectively prevent side reactions between silicon and the electrolyte during charging and discharging. The carbon-based coating layer may include, for example, first amorphous carbon. The carbon-based coating layer may include first amorphous carbon having a high density. The first amorphous carbon may include, for example, pitch carbon, soft carbon, hard carbon, mesophase pitch carbide, calcined coke, carbon fiber, or a mixture thereof. The carbon-based coating layer may further include crystalline carbon. Due to the addition of crystalline carbon in the carbon-based coating layer, the carbon-based coating layer may buffer more effectively the change in the volume of the silicon composite structure. Crystalline carbon may be, for example, natural graphite, artificial graphite, graphene, fullerene, carbon nanotubes, or mixtures thereof. The thickness of the carbon-based coating layer may be, for example, about 1 nm to about 5000 nm, about 10 nm to about 2000 nm or about 5 nm to about 2500 nm.

In some embodiments, the silicon-containing structure may further include second amorphous carbon disposed within the silicon composite structure. For example, the silicon composite structure may include porous silicon secondary particles, and second amorphous carbon may be disposed in the pores of the porous silicon secondary particles. The second amorphous carbon may be disposed among a plurality of silicon composite primary particles constituting the porous silicon secondary particles. Silicon composite primary particles may include, for example, silicon; silicon dioxide $SiO_2$ and/or silicon suboxide ($SiO_x$, $0<x<2$) disposed on silicon); a second carbon flake disposed on silicon dioxide $SiO_2$ and/or silicon suboxide; and second amorphous carbon disposed on the second carbon flake. As the pores of the silicon composite structure are filled with dense second amorphous carbon, a dense structure having a non-porous structure can be obtained. As the silicon composite structure includes such a non-porous structure, side reactions thereof with the electrolyte solution during charging and discharging can be further reduced, and volume change of silicon can be more effectively alleviated. The second amorphous carbon may include, for example, pitch carbon, soft carbon, hard carbon, mesophase pitch carbide, calcined coke, carbon fiber, or a mixture thereof.

The mixing ratio of the total weight of the first carbon, which is the sum of the carbon of the first carbon flake and the carbon of the second carbon flake, to the weight of the second carbon, which is the carbon of the carbon-based coating layer, in the silicon composite structure, may be, for example, 30:1 to 1: 3, 20:1 to 1:1, or 10:1 to 1:0.9. Due to the mixing ratio of the first carbon to the second carbon within these ranges, a lithium battery having improved cycle characteristics may be provided. The mixing ratio of the first carbon to the second carbon may be confirmed by thermogravimetric analysis. The first carbon is associated with a peak appearing in the range of 700 °C to 750 °C, and the second carbon is associated with a peak appearing in a region of 600 °C to 650 °C. Thermogravimetric analysis may be carried out in the range of 25 °C to 1,000 °C in an air atmosphere at the heating rate of, for example, about 10 °C/min. The first carbon may be, for example, crystalline carbon and the second carbon may be, for example, amorphous carbon. The mixing ratio of the total weight of the carbon of the first carbon flake and the carbon of the second carbon flake to the total weight of the first amorphous carbon and the second amorphous carbon may be, for example, about 1:99 to about 99:1, about 1:20 to about 80:1, or about 1:1 to about 1:10.

The core may include a silicon-containing compound, $SiO_x$ (0<x<2), as a silicon-containing anode active material. The average particle size of the $SiO_x$ (0<x<2) may be, for example, 1 $\mu$m or more, 3 $\mu$m or more, or 5 $\mu$m or more. The average particle size of the $SiO_x$ (0<x<2) may be, for example, about 1 $\mu$m to about 30 $\mu$m, about 3 $\mu$m to about 20 $\mu$m, or about 5 $\mu$m to about 15 $\mu$m.

The shell may include a composite including a first metal oxide and a first carbon-based material.

As the first carbon-based material, for example, graphene has high electronic conductivity, the interfacial resistance between the dry anode active material and the electrolyte may be reduced. Despite the introduction of the first carbon-based material-containing shell, the increase in the internal resistance of the lithium battery may be suppressed.

The first carbon-based material included in the shell may have low density and high porosity relative to conventional carbon-based material derived from graphite materials because the first carbon-based material is derived from graphene matrix. The interplanar distance d002 of the first carbon-based material included in the shell of the dry anode active material may be, for example, 3.38 Å or more, 3.45 Å or more, 3.50 Å or more, 3.60 Å or more, 3.80 Å or more, or 4.00 Å or more. The interplanar distance d002 of the first carbon-based material included in the shell of the dry anode active material may be, for example, about 3.38 Å to about 4.0 Å, about 3.38 Å to about 3.8 Å, about 3.38 Å to about 3.6 Å, about 3.38 Å to about 3.5 Å, or about 3.38 Å to about 3.45 Å. In some embodiments, the interplanar distance d002 of conventional carbon-based materials derived from graphite materials may be, for example, 3.38 Å or less, or from about 3.35 Å to about 3.38 Å. The first metal oxide can prevent deterioration of the core during charging and discharging at high voltage because the first metal oxide has high-voltage resistance. For example, the shell may include a single type of first metal oxide, or two or more different types of first metal oxide. As a result, cycle characteristics of the lithium battery including the dry anode active material are improved, and volume change can be suppressed.

The shell may include, for example, the first carbon-based material, and the core may include, for example, as a silicon-containing anode active material, a silicon-containing structure and/or a silicon-containing compound. For example, the first carbon-based material may form a composite together with the silicon-containing structure and/or the silicon-containing compound through a mechanochemical reaction. In some embodiments, the first carbon-based material may be chemically bonded to the silicon-containing structure and/or the silicon-containing compound through chemical bonding. The core and shell are composited by chemically bonding the first carbon-based material disposed in the shell and the silicon-containing structure and/or silicon-containing compound disposed in the core through chemical bonding. Thus, the composite anode active material may be distinguished from simple physical mixtures of the first carbon-based material and the silicon-containing structure and/or silicon-containing compound. The first metal oxide included in the shell and the carbon-based material may also be chemically bound through a chemical bond. In some embodiments, the chemical bond may be, for example, a covalent bond or an ionic bond.

The composite may include a first carbon-based material. The first carbon-based material has, for example, a branched structure, and at least one metal oxide selected from the first metal oxide and the second metal oxide may be distributed in the branched structure of the first carbon-based material. The branched structure of the first carbon-based material may include, for example, a plurality of first carbon-based material particles in contact with each other. As the first carbon-based material has a branched structure, various conductive paths may be provided. The first carbon-based material may be, for example, graphene. Graphene has, for example, a branched structure, and at least one metal oxide selected from the first metal oxide and the second metal oxide may be distributed in the branched structure of graphene. The branched structure of graphene may include, for example, a plurality of graphene particles in contact with one another. As the graphene has a branched structure, various conductive paths may be provided.

The first carbon-based material may have, for example, a spherical structure, and at least one metal oxide selected from the first metal oxide and the second metal oxide may be distributed in the spherical structure. The size of the spherical structure of the first carbon-based material may be about 50 nm to about 300 nm. The number of first carbon-based materials having a spherical structure may be two or more. The spherical structure of the first carbon-based material may allow the composite to have a rigid structure. The first carbon-based material may be, for example, graphene. Graphene may have, for example, a spherical structure, and at least one metal oxide selected from the first metal oxide and the second metal oxide may be distributed in the spherical structure. The size of the spherical structure of graphene may be about 50 nm to about 300 nm. The number of graphene having the spherical structure may be two or more. The spherical structure of graphene allows the composite to have a rigid structure.

The first carbon-based material may have, for example, a spiral structure in which a plurality of spherical structures are connected, and at least one metal oxide selected from the first metal oxide and the second metal oxide may be distributed in the spherical structure of the spiral structure. The size of the spiral structure of the first carbon-based material may be about 500 nm to about 100 um. The spiral structure of the first carbon-based material allows the composite to have a rigid structure. The first carbon-based material may be, for example, graphene. The graphene may have, for example, a spiral structure in which a plurality of spherical structures are connected, and at least one metal oxide selected from the first metal oxide and the second metal oxide may be distributed in the spherical structures in the spiral structure. The spiral structure of the graphene may have a size of about 500 nm to about 100 $\mu$m. The spiral structure of graphene may allow the composite to have a rigid structure.

The first carbon-based material may have, for example, a cluster structure in which a plurality of spherical structures are aggregated, and at least one metal oxide selected from the first metal oxide and the second metal oxide may be distributed in the spherical structures of the cluster structure. The size of the cluster structure of the first carbon-based material may be about 0.5 mm to about 10 cm. The cluster structure of the first carbon-based material may allow the composite to have a rigid structure. The first carbon-based material may be, for example, graphene. Graphene may have, for example, a cluster structure in which a plurality of spherical structures are aggregated, and at least one metal oxide selected from the first metal oxide and the second metal oxide may be distributed in the spherical structures of the cluster structure. The size of the cluster structure of graphene may be about 0.5 mm to about 10 cm. The cluster structure of the graphene may allow the composite to have a rigid structure.

The composite may have, for example, a faceted-ball structure, and at least one selected from the first metal oxide and the second metal oxide may be distributed within the structure or on a surface of the structure. As the composite is such a polyhedron-ball structure, the composite may be easily coated on the irregular surface of the core.

The composite may have, for example, a planar structure, and at least one selected from the first metal oxide and the second metal oxide may be distributed inside or on the surface of the planar structure. As the composite is such a two-dimensional planar structure, the composite may be easily coated on the irregular surface of the core.

The first carbon-based material may extend from the first metal oxide by a distance of 10 nm or less, and may include at least 1 to 20 first carbon-based material layers. For example, by stacking a plurality of 20 first carbon-based material layers, a first carbon-based material having a total thickness of 12 nm or less may be disposed on the first metal oxide. For example, the total thickness of the carbon-based material may be about 0.6 nm to about 12 nm. The first carbon-based material may be, for example, graphene. Graphene may extend up to a distance of 10 nm or less from the first metal oxide and contain at least 1 to 20 graphene layers. For example, graphene having a total thickness of 12 nm or less may be disposed on the first metal oxide by stacking a plurality of graphene layers. For example, the total thickness of graphene may be about 0.6 nm to about 12 nm.

The shell may further include a second carbon-based material that is fibrous carbon. The second carbon-based material may include fibrous carbon.

By further including the second carbon-based material that is fibrous carbon in the shell, a conducting path of the anode active material may be further increased. The second carbon-based material may form a three-dimensional conductive network among a plurality of anode active materials to reduce internal resistance of an anode including the anode active material. By fixing the fibrous carbon on the anode active material, a uniform and stable three-dimensional conductive network can be formed among the plurality of anode active materials. Therefore, high rate characteristics of a lithium battery including an anode active material including the second carbon-based material may be improved.

The aspect ratio of the second carbon-based material may be 10 or more, for example, about 10 to about 100,000, about 10 to about 80,000, about 10 to about 50,000, about 10 to about 10,000, about 10 to about 5000, about 10 to about 1000, about 10 to about 500, about 10 to about 100, or about 10 to about 50. The aspect ratio of the second carbon-based material may be, for example, the ratio of the length of the major axis, for example, the length of the second carbon-based material, passing through the center of the second carbon-based material to the length of the minor axis, for example, the diameter of the second-based material, passing through the center of the second carbon-based material and perpendicular to the major axis.

The diameter of the second carbon-based material may be, for example, about 1 nm to about 50 nm, about 1 nm to about 30 nm, or about 1 nm to about 10 nm. **If** the diameter of the second carbon-based material is in these ranges, the absolute number of strands per volume may be reduced, and thus uniform dispersion may be achieved without an insignificant internal resistance reduction effect.

The length of the second carbon-based material may be, for example, about 100 nm to about 1000 $\mu$m, about 100 nm to about 500 $\mu$m, about 100 nm to about 100 $\mu$m, about 100 nm to about 50 $\mu$m, about 100 nm to about 10 $\mu$m, about 100 nm to about 5 $\mu$m, about 100 nm to about 2 $\mu$m, about 100 nm to about 1 $\mu$m, about 100 nm to about 500 nm, or about 100 nm to about 300 nm. The length of the second carbon-based material may be, for example, about 500 nm to about

1000 $\mu$m, about 500 nm to about 500 $\mu$m, about 500 nm to about 100 $\mu$m, about 500 nm to about 50 $\mu$m, about 500 nm to about 10 $\mu$m, about 500 nm to about 5 $\mu$m, or about 500 nm to about 2 $\mu$m. If the length of the second carbon-based material is within these ranges, an effective conduction path may be provided without reducing the internal resistance of an electrode.

The second carbon-based material may include, for example, carbon nanofibers, carbon nanotubes, or a combination thereof.

The carbon nanotubes may include, for example, a carbon nanotube primary structure, a carbon nanotube secondary structure formed by aggregating a plurality of carbon nanotube primary particles, or a combination thereof.

The primary structure of carbon nanotubes may be one carbon nanotube unit.

The primary structure of carbon nanotubes may include, for example, singlewalled carbon nanotubes (SWCNT), double-walled carbon nanotubes (DWCNT), multi-walled carbon nanotubes (MWCNT), or a combination thereof. The diameter of the primary structure of carbon nanotubes may be, for example, about 1 nm to about 20 nm, about 1 nm to about 15 nm, or about 2 nm to about 10 nm. The length of the primary structure of carbon nanotubes may be, for example, about 100 nm to about 2 $\mu$m, about 100 nm to about 1 $\mu$m, about 100 nm to about 500 nm, about 100 nm to about 400 nm, about 100 nm to about 300 nm, or about 200 nm to about 300 nm. The diameter and length of the primary structure of carbon nanotubes may be measured using a scanning electron microscope (SEM) image or a laser diffraction method.

The secondary structure of carbon nanotubes is a structure in which the primary structure of carbon nanotubes is assembled to form a bundle-type or rope-type structure, either partially or completely. The secondary structure of carbon nanotubes may include, for example, bundle-type carbon nanotubes, rope-type carbon nanotubes, or a combination thereof. The diameter of the secondary structure of carbon nanotubes may be, for example, greater than or equal to 2 nm or greater than or equal to 3 nm. The diameter of the secondary structure of carbon nanotubes may be, for example, 50 nm or less, 30 nm or less, or 10 nm or less. The diameter of the secondary structure of carbon nanotubes may be, for example, 50 nm or less, 30 nm or less, or 10 nm or less. The diameter of the secondary structure of carbon nanotubes may be, for example, about 2 nm to about 50 nm, about 2 nm to about 30 nm, or about 2 nm to about 20 nm. The length of the secondary structure of carbon nanotubes may be, for example, about 500 nm to about 1000 $\mu$m, about 500 nm to about 500 $\mu$m, about 500 nm to about 200 $\mu$m, about 500 nm to about 100 $\mu$m, or about 500 nm to about 50 $\mu$m. The diameter and length of the secondary structure of carbon nanotubes may be measured by SEM imaging or optical microscopy, or laser diffraction. The secondary structure of carbon nanotubes may be used for the preparation of the dry anode active material, after being dispersed in a solvent and converted into primary structure of carbon nanotubes.

The amount of the second carbon-based material may be, for example about 0.1 wt% to about 50 wt%, about 1 wt% to about 40 wt%, or about 5 wt% to about 30 wt%, based on the total weight of the first carbon-based material and the second carbon-based material. Due to the inclusion of these ranges of the first carbon-based material and the second carbon-based material by the dry anode active material, a conduction path may be effectively obtained within the composite cathode active material, which can result in a further reduction in the internal resistance of the dry anode active material. As a result, cycle characteristics of the lithium battery including the dry anode active material may be further improved. The content of the second carbon-based material may be, for example, about 0.001 wt% to about 5 wt%, about 0.01 wt% to about 3 wt%, or about 0.01 wt% to about 1 wt%, based on the total weight of the dry anode active material. As the dry anode active material includes these ranges of the second carbon-based material, a conduction path may be ensured within the composite anode active material, which may result in a further reduction in the internal resistance of the dry anode active material. As a result, cycle characteristics of the lithium battery including the dry anode active material may be further improved.

The specific surface area of the dry anode active material may be, for example, about 1 m$^2$/g to about 100 m$^2$/g, about 1 m$^2$/g to about 50 m$^2$/g, or about 1 m$^2$/g to about 30 m$^2$/g. If the composite anode active material has these ranges of specific surface areas, cycle characteristics of a lithium battery using the composite anode active material may be further improved. The average particle diameter (D50) of the composite anode active material may be, for example, about 1 $\mu$m to about 30 $\mu$m, about 3 $\mu$m to about 20 $\mu$m, or about 5 $\mu$m to about 15 $\mu$m. The particle size (D10) of the composite anode active material may be, for example, about 0.1 $\mu$m to about 10 $\mu$m, about 0.5 $\mu$m to about 10 $\mu$m, or about 1 $\mu$m to about 10 $\mu$m. The particle size (D90) of the composite anode active material may be, for example, about 10 $\mu$m to about 50 $\mu$m, about 10 $\mu$m to about 30 $\mu$m, or about 10 $\mu$m to about 25 $\mu$m. If the composite anode active material has these ranges of average particle diameters (D50), particle diameter (D10), and/or particle diameter (D90), cycle characteristics of a lithium battery using such a dry anode may be further improved.

The content of the dry conductive material included in the dry anode film may be, for example, about 0.1 wt% to about 5 wt%, about 0.5 wt% to about 5 wt%, or about 1 wt% to about 5 wt%, based on the total weight of the dry anode film. If the dry anode film includes these ranges of the dry conductive material, the conductivity of the dry anode film is improved, and cycle characteristics of a lithium battery including the dry anode film may be improved.

The dry anode film may be, for example, a self-standing film. In some embodiments, the dry anode film may maintain the film form without a support. Therefore, the dry anode film may be prepared as a separate self-standing film and then disposed on the electrode current collector. The dry anode film is manufactured in a dry process, and therefore, may not contain intentionally added processing solvents. For example, residual processing solvents may not be included. Unintended trace amounts of solvent may remain in the dry anode film, but these solvents are not intentionally added processing solvents. Therefore, the dry anode film may be distinguished from the wet electrode film prepared by mixing the components and a processing solvent and then removing some or all of the processing solvent by drying.

In some embodiments, regarding the dry anode film, the first dry anode film may include, as a core of a dry composite anode active material, a mixture of a carbon-based material and a silicon-based active material, a composite of a carbon-based material and a silicon-based active material; or a combination thereof, and the second dry anode film includes, as a core of a dry composite anode active material, a carbon-based material, wherein the content of the binder and the content of the composite of the first dry anode film are respectively the same or greater than the content of the binder and the content of the composite of the second dry anode film.

The second dry anode film may further include a conductive material. The conductive material may be a composite (GB), Denka Black, Summer Black, Super P, carbon nanotube, activated carbon, carbon molecular sieve, graphene, carbon black, graphite fine particles, natural graphite, artificial graphite, acetylene black, Ketjen black, carbon fiber, carbon nanotubes; metal powder or metal fiber or metal tube of copper, nickel, aluminum, or silver; conductive polymers such as polyphenylene derivatives. In some embodiments, the composite is the same as the composite including at least one first metal oxide and the first carbon-based material, constituting the shell of the composite anode active material, and thus a description thereof will be omitted.

The dry anode film may include a first dry anode film disposed adjacent to an anode current collector and a second dry anode film disposed on the first dry anode film, wherein the first dry anode film may include, as a core of a dry composite anode active material, a mixture of a carbon-based material and a silicon-based active material, a composite of a carbon-based material and a silicon-based active material, or a combination thereof, and the second dry anode film may include, as a core of a dry composite anode active material, a mixture of a carbon-based material and a silicon-based active material, a composite of a carbon-based material and a silicon-based active material, or a combination thereof, wherein the contents of the composite (GB) and binder of the first dry anode film may be equal to or greater than the contents of the composite and binder of the second dry anode film, respectively, and the content of a mixture of a carbon-based material and a silicon-based active material, a composite of a carbon-based material and a silicon-based active material, or a combination thereof in the first dry anode film may be equal to or greater than the content of a mixture of a carbon-based material and a silicon-based active material, a composite of a carbon-based material and a silicon-based active material, or a combination thereof in the second dry anode film.

The first dry anode film may include, as a core of a dry composite anode active material, a carbon-based material and a silicon-based active material, and the silicon-based active material includes a silicon composite structure, and the second dry anode film may include, as a core of a dry composite anode active material, a carbon-based material, and the content of the binder and the content of the composite of the first dry anode film may be equal to or greater than the content of the binder and the content of the composite of the second dry anode film, respectively.

The dry anode film may include a first dry anode film disposed adjacent to an anode current collector and a second dry anode film disposed on the first dry anode film, wherein the first dry anode film may include, as a core of a dry composite anode active material, a carbon-based material and a silicon-based active material, and the second dry anode film includes, as a core of a dry composite anode active material, a carbon-based material and a silicon-based active material. In some embodiments, the silicon-based active material of the first dry anode film and the second dry anode film may include a silicon composite structure. The contents of the composite (GB) and the binder in the first dry anode film may be equal to or greater than the contents of the composite and the binder in the second dry anode film.

The contents of the carbon-based material and the silicon-based active material in the first dry anode film may be equal to or greater than the contents of the carbon-based material and the silicon-based active material in the second dry anode film.

The structure of a dry anode-separator subassembly using a dry anode film according to embodiments will be described with reference to the accompanying drawings.

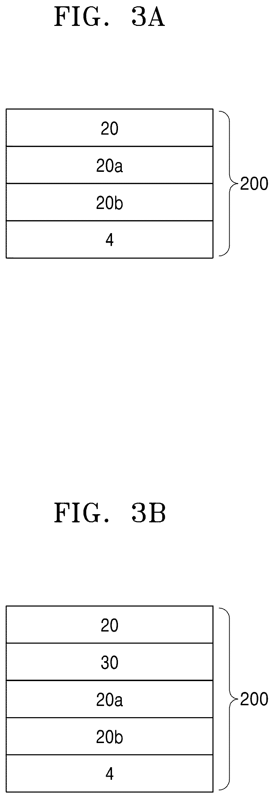

Referring to FIG. 3A, the dry anode-separator subassembly 200 includes a first dry anode film 20a stacked on an anode current collector 20, and a second dry anode film 20b on the first dry anode film 20a, and a separator 4 is stacked thereon.

The dry anode-separator subassembly 200 shown in FIG. 3B is different from the embodiment of FIG. 3A in that an interlayer 30 is disposed between the anode current collector 20 and the first dry anode film 20a.

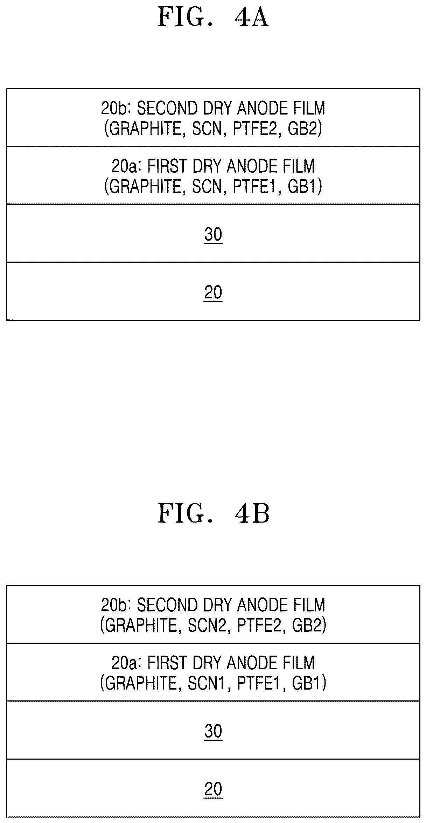

FIGS. 4A to 4C show a stack structure of a dry anode according to embodiments, and specifically show compositions of a first dry anode and a second dry anode.

According to embodiments, as shown in FIG. 4A, the first dry anode film 20a may include: an anode active material, which is the first anode active material, in which a composite (GB1)-containing shell is coated on graphite, which is a carbon-based material; and a silicon composite structure (SCN), which is the second anode active material; and polytetrafluoroethylene (PTFE1), which is a dry binder. The second dry anode film 20b may include: an anode active material, which is the first anode active material, in which a composite (GB2)-containing shell is coated on graphite; a silicon composite structure (SCN), which is the second anode active material; and polytetrafluoroethylene (PTFE2), which is a dry binder.

The silicon composite structure may be: a silicon-carbon composite including silicon particles and a first carbon-based material; a silicon-carbon composite including a core in which silicon particles and a second carbon-based material are mixed, and a third carbon-based material surrounding the core; or a combination thereof.

The contents of PTFE1 and GB1 of the first dry anode film 20a may be adjusted to be equal to or greater than the contents of PTFE2 and GB2 of the second dry anode film 20b, respectively (PTFE1 $\geq$ PTFE2, GB1 $\geq$ GB2). Within these ranges, peeling of the dry anode film from the anode current collector may be effectively prevented, and lithium dendrite may be induced to grow less in the direction farther from the anode current collector.

The mixing weight ratio of PTFE1 and PTFE2 is not limited, and may be 10:1 to 1.1:1, 9.5:1 to 1.3:1, 9:1 to 1.5:1, 9:1 to 1.5:1, 6:1 to 1.5:1, 5:1 to 1.8:1, or 4:1 to 2:1.

The mixing weight ratio of GB1 and GB2 is not limited, and may be 10:1 to 1.1:1, 9.5:1 to 1.3:1, 9:1 to 1.5:1, 9:1 to 1.5:1, 6:1 to 1.5:1, 5:1 to 1.8:1, or 4:1 to 2:1.

Each of the content of the silicon composite structure in the first dry anode film and the content of the silicon composite structure in the second dry anode film may be, based on 100 parts by weight of the total content of graphite and the silicon composite structure, about 5 parts by weight to about 20 parts by weight, about 11 parts by weight to about 18 parts by weight, or about 12 parts by weight to about 15 parts by weight.

According to embodiments, as shown in FIG. 4B, the first dry anode film 20a may include: a composite anode active material, which is the first anode active material, in which a composite (GB1)-containing shell is coated on graphite; and a silicon composite structure, which is the second anode active material; and polytetrafluoroethylene (PTFE1), which is a dry binder. The second dry anode film 20b may include: a composite anode active material, which is the first anode active material, in which a composite (GB2)-containing shell is coated on graphite; a silicon composite structure, which is the second anode active material; and polytetrafluoroethylene (PTFE2), which is a dry binder.

The content of SCN1 in the first dry anode film may be adjusted to be greater than that of SCN2 in the second dry anode film. If the content of SCN1 is adjusted to be greater than that of SCN2, the contents of PTFE1 and GB1 of the first dry anode film may be adjusted to be equal to or greater than the contents of PTFE2 and GB2 of the second dry anode film, respectively (SCN1$\geq$SCN2, PTFE1 $\geq$ PTFE2, GB1 $\geq$ GB2). Within these ranges, the volume expansion of the dry anode film may be suppressed, and lithium dendrite may be induced to grow less in the direction farther away from a current collector.

The mixing weight ratio of the content of SCN1 of the first dry anode film and the content of SCN2 of the second dry anode film is not limited, and may be 10:1 to 1.1:1, 9.5:1 to 1.3:1, 9:1 to 1.5:1, 9 :1 to 1.5:1, 6:1 to 1.5:1, 5:1 to 1.8:1, or 4:1 to 2:1.

If the silicon content of the first dry anode film is greater than that of the second dry anode film, the expansion rate of an electrode is reduced, the formation of dendrites is reduced during rapid charging, the invasiveness of an electrolyte is improved, and the detachment of an electrode is reduced, and high electrode stability may be obtainable using a smaller amount of binder. In some embodiments, if the contents of PTFE1 and GB1 of the first dry anode film are equal to or greater than the contents of PTFE2 and GB2 of the second dry anode film, respectively, the peeling of the dry anode film from the anode current collector may be effectively prevented and lithium dendrites may be induced to grow less in the direction farther from the current collector.

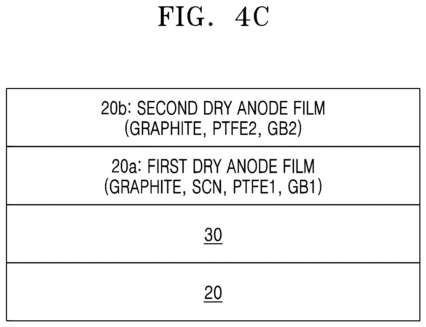

According to some embodiments, as shown in FIG. 4C, the second dry anode film 20b disposed farther from the anode current collector 20 may include: a first composite anode active material including a graphite core/composite (GB1) shell as an anode active material; and PTFE1 as a binder, and the first dry anode film 20a disposed adjacent to the anode current collector 20 may include: as a dry composite anode active material, a first composite anode active material in which the composite GB1-containing shell is coated on graphite and a second composite anode active material including a silicon composite structure (SCN) as a core/composite (GB2) as a shell, and PTFE2 as a binder.

The total content of graphite and silicon composite structure (SCN) of the first dry anode film may be adjusted to be greater than that of graphite of the second dry anode film.

The mixing weight ratio of the total content of graphite and silicon composite structure (SCN) in the first dry anode film and the content of graphite in the second dry anode film is not limited, and may be 10:1 to 1.1:1, 9.5:1 to 1.3. :1, 9:1 to 1.5:1, 9:1 to 1.5:1, 6:1 to 1.5:1, 5:1 to 1.8:1, or 4:1 to 2:1.

For example, in the first composite anode active material, the content of the composite GB1 may be adjusted to be greater than that of the composite GB2, and the content of PTFE1, which is a binder, may be adjusted to be equal to or greater than the content of PTFE2, which is a binder (PTFE1 $\geq$ PTFE2, GB1 $\geq$ GB2). By forming such a structure, the control of the volume expansion and the deriving of smaller growth of lithium dendrites in the direction farther than the current collector, may be achieved.

The mixing weight ratio of PTFE1 and PTFE2 and the mixing weight ratio of GB1 and GB2 described in the embodiments described in FIGS. 4B and 4C are the same as described in FIG. 4A.

The first dry anode film and the second dry anode film of FIGS. 4A to 4C may further include a conductive material.

For example, the second dry anode film of FIG. 4C may include, as an anode active material, a first composite anode active material including a graphite core/composite (GB1) shell, and PTFE1 as a binder, and the second dry anode film may further include a conductive material. A composite (GB) or the like may be used as the conductive material. In some embodiments, as the composite is the same as the composite, constituting the shell, including at least one first metal oxide and the first carbon-based material., and thus a description thereof will be omitted.

The thickness of each of the first dry anode film and the second dry anode film in the dry anode including the dry anode film described above,

may be formed at a ratio of 1:3 to 3:1, 1:2 to 2:1, or 1:1.

According to embodiments, the dry anode film may have a multi-layer structure of 2 or more layers, 2 to 5 layers or 2 to 3 layers, and may be used to form a thick film.

The term "solvent-free" used herein refers to a component that excludes any amount of residual processing solvents in order to operate properly. According to embodiments, the dry anode film may be a self-standing film, and may be free of residual processing solvents.

The dry anode film according to embodiments may have the tensile strength of, for example, 450 kPa or more, 500 kPa or more, 700 kPa or more, or 1000 kPa or more, at 25 °C. This tensile strength may be before pressing. The tensile strength of the dry anode film before pressing at 25 °C may be, for example, about 500 kPa to about 5000 kPa, about 600 kPa to about 5000 kPa, about 700 kPa to about 5000 kPa, or about 800 kPa to about 5000 kPa.

The tensile strength of the dry anode film after pressing at 25 °C may be 1000 kPa or more, 1050 kPa or more, 1200 kPa or more, or 1500 kPa or more. The tensile strength of the dry anode film after pressing at 25 °C may be, for example, about 1000 kPa to about 5000 kPa, about 1050 kPa to about 5000 kPa, about 1090 kPa to about 5000 kPa, about 1200 kPa to about 5000 kPa, or about 1800 kPa to about 5000 kPa. Within these ranges of tensile strength, the structural stability of the dry anode film may be increased. Therefore, the dry anode film maintains a stable three-dimensional conductive network during the charging and discharging process, so that the reversibility of the electrode reaction can be improved. Within these ranges of tensile strength, the mechanical strength of the dry anode film may be increased. As the dry anode film has improved mechanical strength, local deterioration due to volume change during charging and discharging of an electrode having a dry anode film and a lithium battery including the same may be suppressed. As a result, cycle characteristics of the lithium battery may be improved.

The dry anode film may provide, due to the inclusion of the dry anode active material, improved cycle characteristics and reduced volume change.

In some embodiments, a method of preparing a dry anode includes preparing a dry mixture by dry mixing a dry composite anode active material, and a dry binder, providing an anode current collector, disposing an interlayer on one surface of the anode current collector, and disposing and pressing the dry mixture on the interlayer to obtain a dry anode film and preparing an anode in which an anode active material layer is disposed on one surface of the anode current collector.

First, a dry mixture may be prepared by dry mixing an anode active material and a dry binder.

During the preparing the dry mixture, a dry conductive material may be further included.

Dry mixing refers to mixing while a processing solvent may not be included. The processing solvent may be, for example, solvents used in the preparation of electrode slurries. The processing solvent may be, for example, water, NMP, etc., but is not limited thereto, and any processing solvent that is used in the preparation of an electrode slurry, may be used herein. Dry mixing may be performed at a temperature of for example 25 °C to 65 °C using an agitator. Dry mixing may be performed using an agitator at a rotation speed of, for example, about 10 rpm to about 10000 rpm, or about 100 rpm to about 10000 rpm. Dry mixing may be performed using an agitator, for example, for about 1 minute to about 200 minutes, or about 1 minute to about 150 minutes. The composite anode electrode active material may be a dry composite anode active material.

Dry mixing may be performed, for example, at least one time. First, a first mixture may be prepared by primary dry mixing of a dry composite anode active material and a dry binder. During preparing the first mixture, a dry conductive material may be further added. The primary dry mixing may be performed at a temperature of, for example, about 25 °C to about 65 °C, at a rotational speed of 2000 rpm or less, or about 500 rpm to about 2000 rpm, for 15 minutes or less, for example, about 5 minutes to about 15 minutes. The dry composite anode active material and the dry binder may be uniformly mixed by primary dry mixing. Subsequently, a second mixture may be prepared by secondary dry mixing of the dry composite anode active material and a dry binder. In some embodiments, the secondary dry mixing may be performed for 10 minutes or more, or about 10 minutes to about 60 minutes, at a rotational speed of 4000 rpm or more, or about 4000 rpm to about 9000 rpm at a temperature of 25 °C to 65 °C, or 25 °C to 65 °C. A dry mixture including a fibrillated dry binder may be obtained by secondary dry mixing.

The agitator may be, for example, a kneader. In some embodiments, the agitator may include: a chamber; one or more rotating shafts which are located inside the chamber and rotate; and a blade rotatably coupled to the rotation shafts and located in the longitudinal direction of the rotation shafts. The blade may be, for example, one or more selected from a ribbon blade, a sigma blade, a jet (Z) blade, a dispersion blade, and a screw blade. Due to the inclusion of the blade, a doughlike mixture can be prepared by effectively mixing the dry anode composite active material, the dry conductive material, and the dry binder, even without a solvent.

The prepared dry mixture may be put into an extrusion device and extruded into a sheet form. The pressure at the time of extrusion may be, for example, about 4 MPa to about 100 MPa, or about 10 MPa to about 90 MPa. The obtained extruded product in the form of a sheet may be a sheet for the anode active material layer, for example, the dry anode film. By repeatedly performing this process, a dry anode film having a multi-layer structure may be easily manufactured.

As the dry conductive material, carbon black, graphite fine particles, natural graphite, artificial graphite, acetylene black, Ketjen black, carbon fiber; carbon nanotubes; metal powder, metal fiber or metal tube of, for example, copper, nickel, aluminum, or silver; or conductive polymers such as polyphenylene derivatives may be used, but embodiments of the present disclosure are not limited thereto. Any conductive material may be used as long as it is used in the art. The conductive material may be, for example, a carbon-based conductive material. A dry conductive material may be a conductive material that has not come into contact with a processing solvent.

According to embodiments, the dry binder includes a fluorine-based binder.

The dry binder may be a vinylidene fluoride/hexafluoropropylene copolymer, polyvinylidene fluoride, polyacrylonitrile, polymethyl methacrylate, polytetrafluoroethylene (PTFE), a mixture of these polymers, a styrene butadiene rubber-based polymer, etc. However, the binder and the solvent are not limited thereto, and may be any binder or solvent that is used in the art. The dry binder may be, for example, polytetrafluoroethylene (PTFE). A dry binder is a binder that has not been contacted with a processing solvent.

In some embodiments, the dry binder may be a fibrillized binder. The term "fibrillization" used herein refers to a process of converting fibers of a material into individual units of material smaller than the fibers (e.g., by grinding or pulverizing). In one embodiment, the dry binder may have a glass transition temperature (Tg) of from about 15 °C to about 100 °C.

A plasticizer or a pore forming agent may be added to the dry mixture to form pores in an anode active material layer.

The contents of dry composite anode active material, dry conductive material, and dry binder used in the anode active material layer may be used in the same range as of wet anode manufacturing. Next, an anode current collector is provided.

Although not shown in the drawing, the anode current collector may include, for example, a base film and a metal layer disposed on one or both sides of the base film. The base film may include, for example, a polymer. For example, the polymer may be a thermoplastic polymer. The polymer may include, for example, polyethylene terephthalate (PET), PE, PP, polybutylene terephthalate (PBT), polyimide (PI), or a combination thereof. Due to inclusion of a thermoplastic polymer in the base film, the base film gets liquefied in the event of a short circuit and thus may prevent a rapid increase in electric current. For example, the polymer may be an insulating body. The metal layer may include, for example, copper (Cu), stainless steel, titanium (Ti), iron (Fe), cobalt (Co), nickel (Ni), or an alloy thereof.

The metal layer may act as an electrochemical fuse by being disconnected in the event of an overcurrent, to thereby provide protection against short circuits. Limiting current and peak current may be controlled through controlling of the thickness of the metal layer. The metal layer may be plated or deposited on the base film. As the thickness of the metal layer decreases, the limiting current and/or peak current of the anode current collectors 521b, 522b also decrease, and therefore, the lithium battery may have improved stability during a short circuit. A lead-tab may be added on the metal layer for external connection. The lead-tab may be welded to the metal layer or a metal layer/base film stack by ultrasonic welding, laser welding, spot welding, or the like. As the base film and/or the metal layer melt during welding, the metal layer may be electrically connected to the lead-tab. To further secure the welding between the metal layer and the lead-tab, a metal chip may be added between the metal layer and the lead-tab. The metal chip may be a flake of the same material as the metal of the metal layer. For example, the metal chip may be a metal foil, a metal mesh, or the like. For example, the metal chip may be an aluminum foil, a copper foil, an SUS foil, or the like. By welding the lead-tab after placing the metal chip on the metal layer, the lead-tab may be welded to a metal chip/metal layer stack or a metal chip/metal layer/base film stack. As the base film, the metal layer, and/or the metal chip melt during welding, the metal layer or the metal layer/metal chip stack may be electrically connected to the lead-tab. A metal chip and/or a lead-tab may be further added to a portion of the metal layer. The base film may have a thickness of, for example, about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If the base film has a thickness within the above ranges, reduction of the weight of the electrode assembly may be more effectively achieved. The melting point of the base film may be, for example, about 100 °C to about 300 °C, about 100 °C to about 250 °C, or about 100 °C to about 200 °C. As the base film has a melting point within the above ranges, during the process of welding the lead-tab, the base film may melt and be easily bonded to the lead-tab. To improve bonding strength between the base film and the metal layer, a surface treatment such as corona treatment may be performed on the base film. The metal layer may have a thickness of, for example, about 0.01 $\mu$m to about 3 $\mu$m, about 0.1 $\mu$m to about 3 $\mu$m, about 0.1 $\mu$m to about 2 $\mu$m, or about 0.1 $\mu$m to about $\mu$m. If the metal layer has a thickness within the above ranges, stability of the electrode assembly may be ensured while maintaining conductivity. The metal chip may have a thickness of, for example, about 2 $\mu$m to about 10 $\mu$m, about 2 $\mu$m to about 7 $\mu$m, or

about 4 μm to about 6 μm. As the metal chip has a thickness within the above ranges, connection between the metal layer and the lead-tab may be more easily performed. The weight of the electrode may be reduced because the anode current collector has such a structure, resulting in improved energy density.

The anode current collector may be, for example, aluminum foil.

Next, an interlayer may be disposed on at least one surface of the anode current collector. The interlayer may include a carbon-based conductive material and a binder. The interlayer may be omitted.

The carbon-based conductive material may be or include a fibrous carbon-based material, a particulate carbon-based material, or a combination thereof. The aspect ratio of the fibrous carbon-based material and the particulate carbon-based material may independently be greater than or equal to 10, for example, from about 10 to about 100,000, from about 10 to about 80,000, from about 10 to about 50,000, from about 10 to about 100,000, and may be about 10,000, from about 10 to about 5000, from about 10 to about 1000, from about 10 to about 500, from about 10 to about 100, or from about 10 to about 50.

Next, a dry anode film, which is the sheet for an anode active material layer, may be disposed on the interlayer, followed by pressing, thereby preparing an anode in which an anode active material layer is disposed on one side of the anode current collector. An interlayer may be disposed between the anode current collector and the anode active material layer.

The pressing may be, for example, a roll press, a flat press, or the like, but is not necessarily limited thereto. The pressure during pressing may be, for example, about 0.1 ton/cm$^2$ to about 10.0 ton/cm$^2$, but is not limited to this range. If the pressure during pressing is excessively increased, cracks may occur in the anode current collector. If the pressure during pressing is too low, the bonding strength between the anode current collector and the anode active material layer may deteriorate.

A lithium battery according to embodiments may use an anode including the dry anode film described above.

A lithium battery using the anode may have improved interfacial resistance, improved cycle characteristics and reduced volume change.

The lithium battery may be manufactured by the following example method, but embodiments of the present disclosure are not limited to this method and the method may be controlled according to required conditions.

First, a dry anode may be manufactured according to the anode manufacturing method described above.

Next, a cathode active material composition, in which a cathode active material, a conductive material, a binder, and a solvent are mixed, may be prepared. A cathode active material composition may be directly coated on a cathode current collector and dried to prepare a cathode plate. In some embodiments, after the cathode active material composition is cast on a separate support, a film separated from the support may be stacked on an aluminum current collector to manufacture a cathode plate.

The cathode active material may be a lithium-containing metal oxide, and any material commonly used in the art may be used therefor without limitation. As the cathode active material, for example, at least one of composite oxides of lithium and metal selected from cobalt, manganese, nickel, and a combination thereof may be used. The cathode active material may include, for example, at least one selected from lithium cobalt oxide, lithium nickel cobalt manganese oxide, lithium nickel cobalt aluminum oxide, lithium iron phosphate, and lithium manganese oxide, but is not limited thereto. The cathode active material may be any material that is used as a cathode active material for a lithium battery in the art.

The cathode active material may include, for example, a compound represented by one of the following formulae: $Li_aA_{1-b}B_bD_2$ (where $0.90 \leq a \leq 1.8$, and $0 \leq b \leq 0.5$); $Li_aE_{1-b}B_bO_{2-c}D_c$ (where $0.90 \leq a \leq 1.8$, $0 \leq b \leq 0.5$, and $0 \leq c \leq 0.05$); $LiE_{2-b}B_bO_{4-c}D_c$ (where $0 \leq b \leq 0.5$, and $0 \leq c \leq 0.05$); $Li_aNi_{1-b-c}Co_bB_cD_\alpha$ (where $0.90 \leq a \leq 1.8$, $0 \leq b \leq 0.5$, $0 \leq c \leq 0.05$, and $0 < \alpha \leq 2$); $LiaNi_{1-b-c}Co_bBcO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bB_cO_{2-\alpha}F_2$ (where $0.90 \leq a \leq 1.8$, $0 \leq b \leq 0.5$, $0 \leq c \leq 0.05$, and $0 < \alpha < 2$); $Li_aNi_{1-b-c}Mn_bB_cD_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (where $0.90 \leq a \leq 1.8$, $0 \leq b \leq 0.5$, $0 \leq c \leq 0.05$, $0 < \alpha < 2$); $Li_aNi_{1-b-c}Mn_bB_cO_{2-\alpha}F_2$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMnG_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the above formulae, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or combinations thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

A compound having a coating layer added on a surface of the above compound may also be used. Furthermore, a mixture of the above compound with a compound having a coating layer added thereon may also be used. The coating layer added on the surface of the above-described compound may include, for example, compounds of a coating element, such as oxides and hydroxides of the coating element, oxyhydroxides of the coating element, oxycarbonates of the coating

**EP 4 693 444 A1**

element, and hydroxycarbonates of the coating element. A compound forming the above coating layer may be amorphous or crystalline. The coating element included in the coating layer may be Mg, Al, Co, K, Na, Ca, Si, Ti, V, Sn, Ge, Ga, B, As, Zr, or a mixture thereof. A method by which to form a coating layer may be selected from methods that exert no adverse effect on physical properties of the cathode active material. Examples of coating method may include spray coating, dip coating, and the like. Specific types of such coating methods are well known to those of ordinary skill in the art, detailed descriptions of such methods will be omitted.

The cathode active material may be, for example, $LiNiO_2$, $LiCoO_2$, $LiMn_xO_{2x}$ (x=1, 2), $LiNi_{1-x}Mn_xO_2$ (0<x<1), $LiNi_{1-x-y}Co_xMnyO_2$ (0≤x≤0.5, 0≤y≤0.5), $LiFeO_2$, $V_2O_5$, TiS, MoS, or the like.

In some embodiments, the cathode active material may have one of the formulae: $Li_aNi_xCo_yM_zO_{2-b}A_b$ (1.0≤a≤1.2, 0≤b≤0.2, 0.8≤x<1, 0≤y≤0.3, 0<z≤0.3, x+y+z=1, M may be at least one selected from the group consisting of manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and boron (B), and A may be F, S, Cl, Br, or combination thereof), $LiNi_xCo_yMn_zO_2$ (0.8≤x≤0.95, 0<y≤0.2, 0<z≤0.2, and x+y+z=1), $LiNi_xCo_yAl_zO_2$ (0.8≤x≤0.95, 0≤y≤0.2, 0<z≤0.2, and x+y+z=1), $LiNi_xCo_yAl_vMn_wO_2$ (0.8≤x≤0.95, 0≤y≤0.2, 0<v≤0.2, 0<w≤0.2, and x+y+v+w=1), and $Li_aNi_xMn_yM'_zO_{2-b}A_b$ (1.0≤a≤1.2, 0≤b≤0.2, 0<x≤0.3, 0.5≤y<1, 0<z≤0.3, and x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof).

The conductive material, the binder, and the solvent for the cathode active material composition may be the same as those for the anode active material. In some embodiments, pores may be formed inside an electrode plate by further adding a plasticizer to the cathode active material composition and/or the anode active material composition.

The contents of cathode active material, conductive material, binder and solvent may be at the levels commonly used in lithium batteries. At least one of the conductive material, the binder, and the solvent may be omitted depending on the use and configuration of lithium batteries.

In some embodiments, the content of the cathode included in the cathode may be about 0.1 wt% to about 10 wt% or about 0.1 wt% to about 5 wt%, of the total weight of the cathode active material layer. In some embodiments, the content of the conductive material included in the cathode may be about 0.1 wt% to about 10 wt% or about 0.1 wt% to about 5 wt%, of the total weight of the cathode active material layer. In some embodiments, the content of the cathode active material included in the cathode may be about 70 wt% to about 99 wt%, about 90 wt% to about 99 wt%, or about 95 wt% to about 99 wt%, of the total weight of the cathode active material layer.

For example, the cathode current collector may include a base film and a metal layer disposed on one side or both sides of the base film. The base film may include, for example, a polymer. For example, the polymer may include polyethylene terephthalate (PET), polyethylene (PE), polypropylene (PP), polybutylene terephthalate (PBT), polyimide (PI), or a combination thereof. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. Due to the cathode current collector having such a structure, the weight of the electrode may be reduced and as a result, energy density of the lithium battery may be improved.

Next, a separator to be inserted between the cathode and the anode may be prepared.

As for the separator, any one that is typically used in a lithium battery may be used. As the separator, for example, any separator that has low resistance to ion migration of the electrolyte and excellent ability to absorb the electrolyte, may be used. The separator may be a non-woven fabric or a woven fabric including at least one selected from fiberglass, polyester, Teflon, polyethylene, polypropylene, polytetrafluoroethylene (PTFE), and a combination thereof. For lithium-ion batteries, separators that may be wound, such as polyethylene and polypropylene, may be used, and for lithium-ion polymer batteries, separators with excellent organic electrolyte-solution wetting ability may be used.

The separator may be manufactured by the following example method, but embodiments of the present disclosure are not necessarily limited to this method and is adjusted according to required conditions.

First, a separator composition may be prepared by mixing a polymer resin, a filler, and a solvent. The separator composition may be directly coated and dried on the electrode to form a separator. In some embodiments, after a separator composition is cast and dried on a support, a separator film peeled off from the support may be stacked on the electrode to form a separator.

The polymer used to manufacture the separator is not particularly limited, and any polymer used for the binder of an electrode plate may be used. For example, the polymer may utilize a vinylidene fluoride/hexafluoropropylene copolymer, polyvinylidene fluoride (PVDF), polyacrylonitrile, polymethyl methacrylate, or a mixture thereof.

Next, an electrolyte may be prepared.

The electrolyte may be, for example, an organic electrolyte solution. The organic electrolyte solution may be prepared by dissolving a lithium salt in an organic solvent.

For the organic solvent, any organic solvent available in the art may be used. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and mixtures thereof.

The lithium salt may be any lithium salt available in the art. Lithium salts may be, for example, $LiPF_6$, $LiBF_4$, $LiSbF_6$, $LiAsF_6$, $LiClO_4$, $LiCF_3SO_3$, $Li(FSO_2)_2N$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$($1 \leq x \leq 20$, $1 \leq y \leq 20$), LiCl, LiI, or mixtures thereof.

In some embodiments, the electrolyte may be a solid electrolyte. The solid electrolyte may be, for example, boron oxide, lithium oxynitride, etc., but is not limited thereto, and any solid electrolyte used in the art may be used herein. The solid electrolyte may be formed on the anode by a method such as sputtering, or a separate solid electrolyte sheet is stacked on the anode.

The solid electrolyte may be, for example, an oxide-based solid electrolyte or a sulfide-based solid electrolyte.

For example, the solid-state electrolyte may be an oxide-based solid-state electrolyte. The oxide-based solid electrolyte may be selected from $Li_{1+x+y}Al_xTi_{2-x}Si_yP_{3-y}O_{12}$ ($0<x<2$, $0 \leq y<3$), $BaTiO_3$, $Pb(Zr,Ti)O_3$(PZT), $Pb_{1-x}La_xZr_{1-y}Ti_yO_3$ (PLZT)($O \leq x<1$, $O \leq y<1$), $PB(Mg_3Nb_{2/3})O_3-PbTiO_3$(PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$($0<x<2$, $0<y<3$), $Li_xAlyTi_z(PO_4)_3$ ($0<x<2$, $0<y<1$, $0<z<3$), $Li_{1+x+y}$(Al, Ga)$_x$(Ti, Ge)$_{2-x}Si_yP_{3-y}O_{12}$($0 \leq x \leq 1$ $0 \leq y \leq 1$), $Li_xLa_yTiO_3$ ($0<x<2$, $0<y<3$), $Li_2O$, LiOH, $Li_2CO_3$, $LiAlO_2$, $Li_2O-Al_2O_3-SiO_2-P_2O_5-TiO_2-GeO_2$, $Li_{3+x}La_3M_2O_{12}$(M = Te, Nb, or Zr, and x may be an integer from 1 to 10). The solid-state electrolyte may be prepared by a sintering method or the like. For example, the oxide-based solid electrolyte may be a garnet-type solid electrolyte selected from among $Li_7La_3Zr_2O_{12}$(LLZO) and $Li_{3+x}La_3Zr_{2-a}M_aO_{12}$ (M-doped LLZO, M=Ga, W, Nb, Ta, or Al, and x is an integer of 1 to 10).

Examples of the sulfide-based solid-state electrolyte may include lithium sulfide, silicon sulfide, phosphorus sulfide, boron sulfide, or a combination thereof. Sulfide-based solid-state electrolyte particles may include $Li_2S$, $P_2S_5$, $SiS_2$, $GeS_2$, $B_2S_3$, or a combination thereof. The sulfide-based solid-state electrolyte particles may be $Li_2S$ or $P_2S_5$. The sulfide-based solid-state electrolyte particles are known to have a higher lithium ion conductivity than that of other inorganic compounds. For example, the sulfide-based solid-state electrolyte may include $Li_2S$ and $P_2S_5$. If sulfide solid electrolyte materials constituting the sulfide-based solid electrolyte include $Li_2S-P_2S_5$, a mixing molar ratio of $Li_2S$ and $P_2S_5$ may be, for example, in a range of about 50:50 to about 90:10. In some embodiments, an inorganic solid electrolyte prepared by adding $Li_3PO_4$, halogen, halogen compounds, $Li_{2+2x}Zn_{1-x}GeO_4$("LISICON", $0 \leq x<1$), $Li_{3+y}PO_{4-x}N_x$("LIPON", $0<x<4$, $0<y<3$), $Li_{3.25}Ge_{0.25}P_{0.75}S_4$("ThioLISICON"), $Li_2O-Al_2O_3-TiO_2-P_2O_5$("LATP"), and the like to an inorganic solid electrolyte of $Li_2S-P_2S_5$, $SiS_2$, $GeS_2$, $B_2S_3$, or a combination thereof, may be used as a sulfide solid electrolyte. Non-limiting examples of the sulfide solid electrolyte materials may include $Li_2S-P_2S_5$; $Li_2S-P_2S_5-LiX$ (X= a halogen element); $Li_2S-P_2S_5-Li_2O$; $Li_2S-P_2S_5-Li_2O-LiI$; $Li_2S-SiS_2$; $Li_2S-SiS_2-LiI$; $Li_2S-SiS_2-LiBr$; $Li_2S-SiS_2-LiCl$; $Li_2S-SiS_2-B_2S_3-LiI$; $Li_2S-SiS_2-P_2S_5-LiI$; $Li_2S-B_2S_3$; $Li_2S -P_2S_5-Z_mS_n$ ($0<m<10$, $0<n<10$, Z=Ge, Zn, or Ga); $Li_2S-GeS_2$; $Li_2S-SiS_2-Li_3PO_4$; and $Li_2S-SiS_2-Li_pMO_q$ ($0<p<10$, $0<q<10$, and M=P, Si, Ge, B, Al, Ga, or In). In this regard, the sulfide-based solid electrolyte material may be prepared by subjecting a starting material (e.g., $Li_2S$, $P_2S_5$, etc.) of the sulfide-based solid electrolyte material to a treatment such as melt quenching, mechanical milling, and the like. In some embodiments, a calcination process may be performed following the above treatment. The sulfide-based solid electrolyte may be amorphous or crystalline, or may be in a mixed state thereof.

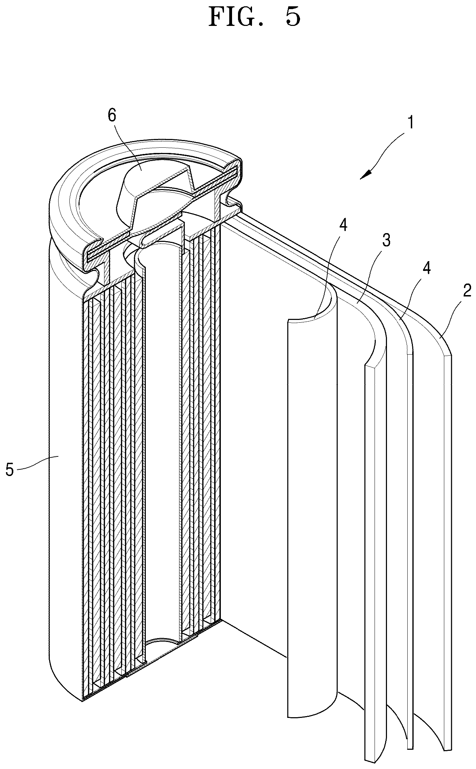

In some embodiments, referring to FIG. 5, a lithium battery 1 includes a cathode 3, an anode 2, and a separator 4. The cathode 3, the anode 2, and the separator 4 may be wound or folded to form a battery structure 7. The battery structure 7 thus formed may be accommodated in a battery case 5. An organic electrolyte may be injected into the battery case 5 and sealed with a cap assembly 6 to complete the manufacture of the lithium battery 1. The battery case 5 may have a cylindrical shape, but is not necessarily limited thereto and may have a polygonal shape, a thin-film shape, and the like.

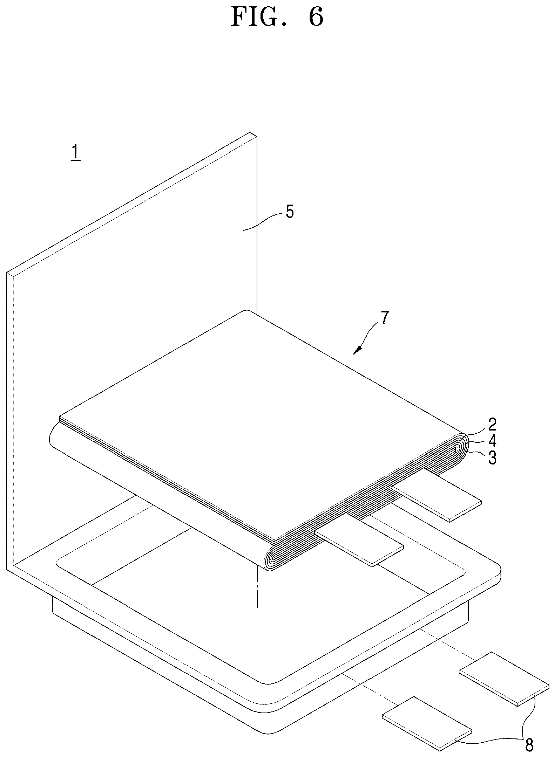

Referring to FIG. 6, a lithium battery 1 according to embodiments may include a cathode 3, an anode 2, and a separator 4. The separator 4 may be located between the cathode 3 and the anode 2, and the cathode 3, the anode 2, and the separator 4 may be wound or folded to form a battery structure 7. The battery structure 7 thus formed may be accommodated in a battery case 5. An electrode tab 8, acting as an electrical path for guiding an electrical current generated in the battery structure 7 to the outside, may be included. An organic electrolyte may be injected into the battery case 5 and sealed to complete the manufacture of the lithium battery 1. The battery case 5 may have a polygonal shape, but without being necessarily limited thereto, may also have a cylindrical shape, a thin-film shape, and the like, for example.

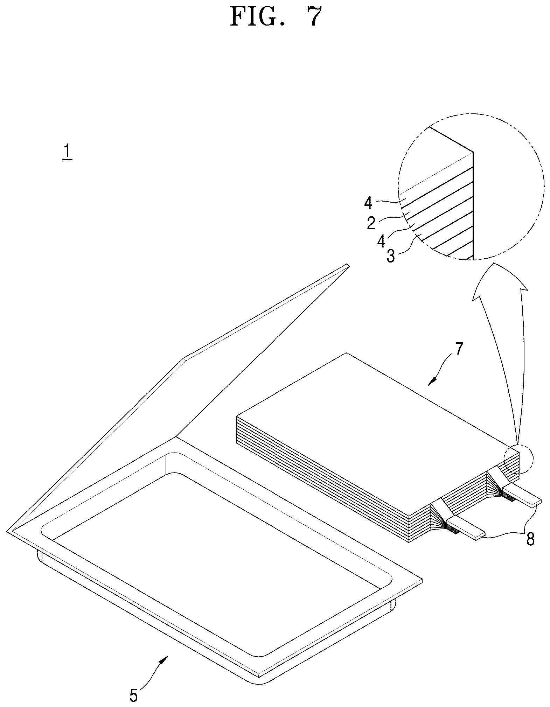

Referring to FIG. 7, a lithium battery 1 according to embodiments may include a cathode 3, an anode 2, and a separator 4. The separator 4 may be located between the cathode 3 and the anode 2 to form a battery structure. The battery structure 7 may be stacked in a bi-cell structure and then accommodated into the battery case 5. An electrode tab 8, acting as an electrical path for guiding an electrical current generated in the battery structure 7 to the outside, may be included. An organic electrolyte may be injected into the battery case 5 and sealed to complete the manufacture of the lithium battery 1. The battery case 5 may have a polygonal shape, but without being necessarily limited thereto, may also have a cylindrical shape, a thin-film shape, and the like, for example.

The pouch-type lithium battery corresponds to those using a pouch as a battery case in the lithium batteries of FIGS. 5 to 7. A pouch type lithium battery may include one or more battery structures. A separator may be located between a cathode and an anode to form a cell structure. After the battery structure is stacked in a bi-cell structure, the resultant structure is wet by an organic electrolyte solution, and then, housed and sealed by a pouch, thereby completing the manufacture of a pouch-type lithium battery. For example, although not shown in the drawings, the cathode, the anode, and the separator may be simply stacked and accommodated in the form of an electrode assembly in a pouch. In some embodiments, the cathode, the anode, and the separator may be wound or folded into an electrode assembly in the form of a jelly roll, and then, accommodated in the pouch. Then, an organic electrolyte may be injected into the pouch, which was then sealed to complete the manufacture of the lithium battery.

Lithium batteries may have excellent lifetime characteristics and high rate characteristics, so they are used, for example, in electric vehicles (EVs). For example, the lithium metal battery may be used in a hybrid vehicle, such as a plug-in hybrid electric vehicle (PHEV) and the like. Also, the lithium metal battery may be used in any field that requires a large amount of energy storage. For example, the lithium metal battery may be used in an electric bicycle, a power tool, and the like.

A plurality of lithium batteries may be stacked to form a battery module, and a plurality of battery modules may form a battery pack. Such a battery pack may be utilized in all types of devices that require high capacity and high output. For example, the battery pack may be used in a laptop computer, a smartphone, an electric vehicle, and the like. The battery module may include, for example, a plurality of batteries and a frame holding the batteries. The battery pack may include, for example, a plurality of battery modules and a bus bar connecting these battery modules. The battery module and/or the battery pack may further include a cooling device. A plurality of battery packs may be controlled by a battery management system. The battery management system may include a battery pack, and a battery control device connected to the battery pack.

In some embodiments, a dry anode includes: an electrode current collector; and the dry anode film disposed on one side or both sides of the electrode current collector.

The internal resistance of the dry anode is reduced and mechanical properties are improved because a dry anode includes a dry anode film.

The electrode current collector may include, for example, a substrate.

A material constituting the substrate may be a material that does not react with lithium, for example, a material that does not form an alloy or compound with lithium and may be any material having conductivity. The substrate may be, for example, a metal or an alloy. The substrate may include, for example, indium (In), copper (Cu), magnesium (Mg), stainless steel (SUS), titanium (Ti), iron (Fe), cobalt (Co), nickel (Ni), zinc (Zn), aluminum (Al), germanium (Ge), or an alloy thereof. The substrate may be in a form selected from, for example, a sheet, a foil, a film, a plate, a porous material, a mesoporous material, a through-hole having material, a polygonal ring material, a mesh material, a foaming material, and a nonwoven material, and is not thereto. The substrate may have any form that is available in the art.

In some embodiments, an electrode current collector may include, for example, a substrate, and an interlayer disposed between the substrate and the dry anode film. The interlayer may include, for example, a carbon-based conductive material.

In some embodiments, the interlayer may be disposed directly on one side or opposite sides of the substrate. In some embodiments, no other layer may be disposed between the substrate and the interlayer. The binding force between the substrate and the dry anode film may be further improved because the interlayer is disposed directly on one side or opposite sides of the substrate.

The thickness of the interlayer may be, for example, about 0.01 % to about 30%, about 0.1 % to about 30%, about 0.5 % to about 30%, about 1 % to about 25%, about 1 % to about 20%, about 1 % to about 15%, about 1 % to about 10%, about 1 % to about 5%, or about or 1 % to about 3%, of the thickness of the substrate. The thickness of the interlayer may be, for example, about 10 nm to about 5 $\mu$m, about 50 nm to about 5 $\mu$m, about 200 nm to about 4 $\mu$m, about 500 nm to about 3 $\mu$m, about 500 nm to about 2 $\mu$m, about 500 nm to about 1.5 $\mu$m, about 700 nm to about 1.3 $\mu$m. If the interlayer has these ranges of thickness, the binding force between the substrate and the dry anode film may be further improved, and an increase in interfacial resistance may be suppressed.

The interlayer may include, for example, a carbon-based conductive material. A carbon-based conductive material included in the interlayer may be selected from carbon-based conductive materials used in a dry anode film. The interlayer may include the same carbon-based conductive material as the carbon-based conductive material used in the dry anode film. The interlayer may be, for example, a conductive layer because the interlayer includes a carbon-based conductive material.

The interlayer may additionally include, for example, a binder. The binding force between the substrate and the dry anode film may be further improved because the interlayer additionally includes a binder. A binder included in the interlayer may be, for example, a conductive binder or a non-conductive binder. Conductive binders may be, for example, ionically conductive binders, and/or electronically conductive binders. Binders having both ion conductivity and electron conductivity may belong to both ion conductive binders and electron conductive binders.

A binder included in the interlayer may be selected from binders used in dry anode films. The interlayer may include the same binder as used for the dry anode film. A binder included in the interlayer may be, for example, a fluorine-based binder. The fluorine-based binder included in the interlayer may be, for example, polyvinylidene fluoride (PVDF). The interlayer may be, for example, a binding layer including a binder. The interlayer may be, for example, a conductive layer including a binder and a carbon-based conductive material.

In some embodiments, the interlayer may be disposed on the substrate in a dry manner or a wet manner. In some embodiments, the interlayer may be disposed on the substrate in a dry manner by vapor deposition such as chemical vapor deposition (CVD), physical vapor deposition (PVD), or the like. In some embodiments, the interlayer may be disposed on the substrate in a wet manner by spin coating, dip coating, or the like. In some embodiments, the interlayer may be disposed on the substrate by depositing a carbon-based conductive material onto the substrate by vapor deposition. The dry-coated interlayer may include a carbon-based conductive material and may not include a binder. In some embodiments, the interlayer may be disposed on the substrate by coating and drying a composition including a carbon-based conductive material, a binder, and a solvent on the surface of the substrate. The interlayer may have a single-layer structure or a multi-layer structure including a plurality of layers, and may have, for example, a two-layer structure, a three-layer structure, or a four-layer structure.

The dry anode film included in the dry anode corresponds to an electrode active material layer.

The dry anode includes a dry anode film, and the dry anode film includes a dry anode active material having the core/shell structure.

The dry anode active material having the core/shell structure includes: a core including a carbon-based material, a mixture of a carbon-based material and a silicon-based active material; a composite of a carbon-based material and a silicon-based active material; or a combination thereof; and a shell including a first metal oxide and a first carbon-based material.

The dry anode active material may additionally include a dry anode active material of the art in addition to the dry anode active material having the core/shell structure. Dry anode active materials of the related art may be used without limitation as long as they are commonly used in the art.

Any dry anode active material may be used as long as it is used as an anode active material for a lithium battery in the art. For example, at least one selected from the group consisting of lithium metal, a metal alloyable with lithium, a transition metal oxide, a non-transition metal oxide, and a carbon-based material, may be included. Examples of the lithium-alloyable metal include Si, Sn, Al, Ge, Pb, Bi, Sb, an Si-Y alloy (Y is an alkali metal, an alkali-earth metal, a Group 13 element, a Group 14 element, a transition metal, a rare earth element, or a combination thereof, not Si), and an Sn-Y alloy (Y is an alkali metal, an alkali-earth metal, a Group 13 element, a Group 14 element, a transition metal, a rare earth element, or a combination thereof, not Sn). The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof. Transition metal oxides may be, for example, lithium titanium oxide, vanadium oxide, lithium vanadium oxide, and the like. Non-transition metal oxides may be, for example, $SnO_2$, $SiOx$ ($0<x<2$), or the like. The carbon-based material may be, for example, crystalline carbon, amorphous carbon, or a mixture thereof. Crystalline carbon may be, for example, graphite, such as natural graphite or artificial graphite, for example in amorphous, plate-like, flake-like, spherical or fibrous form. Amorphous carbon may be, for example, soft carbon (low-temperature calcined carbon) or hard carbon, mesophase pitch carbide, calcined coke, and the like.

As the cathode active material, for example, at least one of composite oxides of lithium and metal selected from cobalt, manganese, nickel, and a combination thereof may be used. Detailed examples thereof are described above.

The dry anode may be, for example, a dry anode. The dry anode includes a dry anode film, and the dry anode film includes a dry anode active material.

In some embodiments, a lithium battery includes a first electrode, a second electrode, and an electrolyte disposed between the first electrode and the second electrode, wherein the first electrode, the second electrode or a combination thereof is the dry anode.

Cycle characteristics of the lithium battery are improved because the lithium battery includes a dry anode having a reduced internal resistance and improved mechanical properties.

In some embodiments, a lithium battery may include a dry anode. In some embodiments, the lithium battery may include a dry anode and a dry cathode. The lithium battery may include, for example, a dry anode and a wet cathode, or may include a dry cathode and a dry anode.

A lithium battery includes an electrolyte, and the electrolyte may include, for example, a liquid electrolyte, a solid electrolyte, a gel electrolyte, or a combination thereof.

A liquid electrolyte, for example, an electrolyte may be an organic electrolyte. The organic electrolyte solution may be prepared by dissolving a lithium salt in an organic solvent.

For the organic solvent, any organic solvent available in the art may be used. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and mixtures thereof.

The lithium salt may be any lithium salt available in the art. Lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are natural numbers), LiCl, LiI, or mixtures thereof.

The solid electrolyte may include, for example, an inorganic solid electrolyte, an organic solid electrolyte, an organic/inorganic composite solid electrolyte, or a combination thereof.

The solid electrolyte may include, for example an oxide-based solid electrolyte, a sulfide-based solid electrolyte, a polymer-based solid electrolyte, or a combination thereof.

The solid electrolyte is, for example, boron oxide, lithium oxynitride, etc., but is not limited thereto, and any solid electrolyte used in the art may be used herein. The solid electrolyte may be formed on the anode by a method such as sputtering, or a separate solid electrolyte sheet may be stacked on the anode.

An oxide-based solid electrolyte may include, for example, $Li_{1+x+y}Al_xTi_{2-x}Si_yP_{3-y}O_{12}$ (0<x<2, 0≤y<3), $BaTiO_3$, $Pb(Zr,Ti)O_3$ (PZT), $Pb_{1-x}La_xZr_{1-y}Ti_yO_3$ (PLZT, 0≤x<1, 0≤y<1), $PB(Mg_3Nb_{2/3})O_3-PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (0<x<2, 0<y<3), $Li_xAl_yTi_z(PO_4)_3$ (0<x<2, 0<y<1, 0<z<3), $Li_{1+x+y}(Al, Ga)_x(Ti, Ge)_{2-x}Si_yP_{3-y}O_{12}$ (0≤x≤1 0≤y≤1), $Li_xLa_yTiO_3$ (0<x<2, 0<y<3), $Li_2O$, LiOH, $Li_2CO_3$, $LiAlO_2$, $Li_2O-Al_2O_3-SiO_2-P_2O_6-TiO_2-GeO_2$, $Li_{3+x}La_3M_2O_{12}$ (M = Te, Nb, or Zr, 0≤x≤10), $Li_{3+x}La_3Zr_{2-y}M_yO_{12}$ (M doped LLZO, M=Ga, W, Nb, Ta, Al, or a combination thereof, 0≤x≤10, 0<y<2), $Li_7La_3Zr_{2-x}Ta_xO_{12}$ (0<x<2, LLZ-Ta), or a combination thereof. The oxide-based solid electrolyte may be, for example, a Garnet-type solid electrolyte. The oxide-based solid electrolyte may be produced by a sintering method or the like.

Oxide-based solid electrolytes may include, for example, $Li_7La_3Zr_2O_{12}$(LLZO), $Li_{6.5}La_3Zr_{1.5}Ta_{0.5}O_{12}$, $Li_{1.3}Al_{0.3}Ti_{1.7}(PO_4)_3$, $Li_{0.34}La_{0.51}TiO_{2.94}$, $Li_{1.07}Al_{0.69}Ti_{1.46}(PO_4)_3$, $50Li_4SiO_4-50Li_2BO_3$, $90Li_3BO_3-10Li_2SO_4$, $Li_{2.9}PO_{3.3}N_{0.46}$, or a combination thereof.

The sulfide-based solid electrolyte may be, for example, at least one selected from $Li_2S-P_2S_5$, $Li_2S-P_2S_5$-LiX where X is a halogen element, $Li_2S-P_2S_5-Li_2O$, $Li_2S-P_2S_6-Li_2O-LiI$, $Li_2S-SiS_2$, $Li_2S-SiS_2$-LiI, $Li_2S-SiS_2$-LiBr, $Li_2S-SiS_2$-LiCl, $Li_2S-SiS_2-B_2S_3$-LiI, $Li_2S-SiS_2-P_2S_6$-LiI, $Li_2S-B_2S_3$, $Li_2S-P_2S_5-Z_mS_n$ where m and n each are a positive number, and Z is Ge, Zn, or Ga, $Li_2S-GeS_2$, $Li_2S-SiS_2-Li_3PO_4$, $Li_2S-SiS_2-Li_pMO_q$, wherein p and q each are a positive number and M is P, Si, Ge, B, Al, Ga, or In, $Li_{7-x}PS_{6-x}Cl_x$ where 0≤x≤2, $Li_{7-x}PS_{6-x}Br_x$ where 0≤x≤2, and $Li_{7-x}PS_{6-x}I_x$ where 0≤x≤2 The sulfide-based solid electrolyte may be prepared by treating starting materials, such as $Li_2S$ and $P_2S_5$, by a method such as melt-quenching, mechanical milling, and the like. In some embodiments, after such a treatment, a heat-treatment may be conducted. The sulfide-based solid electrolyte may be amorphous or crystalline, or may be in a mixed state thereof.

For example, the sulfide-based solid electrolyte may include an argyrodite-type solid electrolyte represented by Formula 9:

$$\text{Formula 9} \qquad Li^+_{12-n-x}A^{n+}X^{2-}_{6-x}Y^-_x$$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, and 1<n<5 and 0<x<2 may be satisfied.

For example, the sulfide-based solid electrolyte may be an argyrodite-type compound including one or more selected from $Li_{7-x}PS_{6-x}Cl_x$ where 0≤x≤2, $Li_{7-x}PS_{6-x}Br_x$ where 0≤x≤2, and $Li_{7-x}PS_{6-x}I_x$ where 0≤x≤2. For example, the sulfide-based solid electrolyte included in the solid electrolyte may be an argyrodite-type compound including at least one selected from $Li_6PS_6Cl$, $Li_6PS_5Br$, and $Li_6PS_5I$.

A polymer-based solid electrolyte may be, for example, a solid electrolyte containing an ion-conductive polymer and a lithium salt, a solid electrolyte containing an ionic liquid polymer and a lithium salt, or a combination thereof.

The ion-conductive polymer may be a polymer including ion-conductive repeating units in a main chain or a side chain. The ion-conductive repeating unit may be a unit having ion conductivity, and may be, for example, an alkylene oxide unit or a hydrophilic unit. In some embodiments, the ion-conductive polymer may include, as a conductive repeating unit, an ether-based monomer, an acryl-based monomer, a methacrylic monomer, a siloxane-based monomer, or a combination thereof. The ion-conductive polymer may be, for example, polyethylene oxide, polypropylene oxide, polymethylmethacrylate, polyethylmethacrylate, polydimethylsiloxane, polyacrylic acid, polymethacrylic acid, polymethylacrylate, polyethylacrylate, poly2-ethylhexylacrylate, polybutylmethacrylate, poly2-ethylhexyl methacrylate, polydecyl acrylate, polyethylenevinylacetate, or a combination thereof. The ion-conductive polymer may be, for example, polyethylene oxide (PEO), polyvinyl alcohol (PVA), polyvinylpyrrolidone (PVP), polyvinylsulfone, or a combination thereof.

In some embodiments, polymeric ionic liquids (PILs) may include a repeating unit including: i) at least one cation selected from ammonium, pyrrolidinium, pyridinium, pyrimidinium, imidazolium, piperidinium, pyrazolium, oxazolium, pyridazinium, phosphonium, sulfonium, triazole, and mixtures thereof, and ii) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $Cl^-$, $Br^-$, $I^-$, $BF_4^-$, $SO_4^-$, $PF_6^-$, $ClO_4^-$, $CF_3SO_3^-$, $CF_3CO_2^-$, $(C_2F_5SO_2)_2N^-$, $(C_2F_5SO_2)(CF_3SO_2)N^-$, $NO_3^-$, $Al_2Cl_7^-$, $AsF_6^-$, $SbF_6^-$, $CF_3COO^-$, $CH_3COO^-$, $CF_3SO_3^-$, $(CF_3SO_2)_3C^-$, $(CF_3CF_2SO_2)_2N^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$ and $(CF_3SO_2)_2N^-$. In some embodiments, the PIL may be poly(diallyldimethylammonium)(TFSI), poly(1-allyl-3-methylimidazolium trifluoromethanesulfonylimide), poly(N-methyl-N-propylpiperidinium bis(trifluoromethanesulfonyl)imide), or a combination thereof.

Examples of the lithium salt include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($1 \le x \le 20$ and $1 \le y \le 20$), $LiCl$, $LiI$, or a combination thereof.

A dry anode manufacturing method according to some embodiments may be provided.

The dry anode manufacturing method may include providing a dry anode film, and disposing a dry electrode film on one side or opposite sides of a current collector.

The providing a dry anode film may include preparing a dry mixture by dry mixing a dry anode active material and a dry binder, and preparing a dry anode film by molding the dry mixture.

First, a dry mixture may be prepared by dry mixing an anode active material and a dry binder. For example, a dry mixture may be prepared by dry mixing a dry anode active material and a dry binder.

The dry mixture may further include a dry conductive material.

Dry mixing refers to mixing while a processing solvent may not be included. The processing solvent may be, for example, solvents used in the preparation of electrode slurries. The processing solvent may be, for example, water, NMP, etc., but is not limited thereto, and any processing solvent that is used in the preparation of an electrode slurry, may be used herein. In some embodiments, dry mixing may be performed at a rotational speed of about 10 rpm to about 10000 rpm at a temperature of 15 °C to 65 °C using an agitator. Dry mixing may be carried out using an agitator for 1 minute to 200 minutes.

Dry mixing may be performed, for example, at least one time. First, a first dry mixture may be prepared by primary dry mixing a dry anode active material, a dry conductive material, and a dry binder. The primary dry mixing may be performed, for example, at a temperature of 25 °C to 65 °C, at a rotation speed of about 10 rpm to about 2000 rpm, for 15 minutes or less. Subsequently, a second mixture may be prepared by additionally performing secondary dry mixing of the first dry mixture. In some embodiments, secondary dry mixing may be performed for about 10 minutes to about 60 minutes at a rotational speed of about 3000 rpm to about 9000 rpm at a temperature of, for example, about 25 °C to about 65 °C. A dry mixture including a fibrillated dry binder may be obtained by secondary dry mixing.

The stirrer may be, for example, a kneader. In some embodiments, the agitator may include: a chamber; one or more rotating shafts which are located inside the chamber and rotate; and a blade rotatably coupled to the rotation shafts and located in the longitudinal direction of the rotation shafts. The blade may be, for example, one or more selected from a ribbon blade, a sigma blade, a jet (Z) blade, a dispersion blade, and a screw blade. Due to the inclusion of the blade, a dough-like mixture can be prepared by effectively mixing an electrode active material, a dry conductive material, and a dry binder without a solvent.

Examples of dry binders may include vinylidene fluoride/hexafluoropropylene copolymer, polyvinylidene fluoride, polyacrylonitrile, polymethyl methacrylate, polytetrafluoroethylene (PTFE), mixtures of the aforementioned polymers, and a styrene butadiene rubber-based polymer. The dry binder may be selected from dry binders used in the dry anode film.

In some embodiments, as the dry conductive material, carbon black, graphite fine particles, natural graphite, artificial graphite, acetylene black, Ketjen black, carbon fiber; carbon nanotubes; metal powder, metal fiber or metal tube of, for example, copper, nickel, aluminum, or silver; or conductive polymers such as polyphenylene derivatives may be used, but embodiments of the present disclosure are not limited thereto. Any conductive material may be used as long as it is used in the art. The conductive material may be, for example, a carbon-based conductive material. The dry conductive material may be selected from dry conductive materials used in the dry anode film.

A plasticizer or a pore forming agent may be added to the dry mixture to form pores in an electrode plate.

The contents of dry anode active material, dry binder, and dry conductive material used in the dry anode film may be at such levels as commonly used in lithium batteries.

The dry cathode film may use a dry anode active material as an anode active material. The dry cathode active material may be understood by referring to the dry anode film described above. The dry anode film may use a dry anode active material as an anode active material. The dry anode active material may be understood by referring to the dry anode film described above.

Then, the dry mixture may be molded to prepare a dry cathode film.

The prepared dry mixture may be fed into an extrusion device and extruded in the form of a sheet or film. In some embodiments, the pressure at the time of extrusion may be about 4 MPa to about 100 MPa.

Next, an electrode current collector in which interlayers are disposed on one side or opposite sides of the substrate may be provided.

The providing an electrode current collector in which an interlayer is disposed on one side or opposite sides of a substrate may include, for example, providing a substrate; and disposing an interlayer on one side or opposite sides of the substrate.

The substrate of the electrode current collector may be understood by referring to the electrode current collector described above. In some embodiments, the substrate for a cathode collector may be aluminum foil. In some embodiments, the substrate for the anode current collector may be copper foil.

Placing the interlayer on one side or opposite sides of the substrate includes dry coating and/or wet coating. In some embodiments, the dry coating may be performed by depositing a carbon-based conductive material and/or a precursor thereof on one side or opposite sides of an electrode current collector. Deposition may be carried out at normal to high temperatures and at atmospheric pressure to vacuum pressure. If an interlayer disposed by dry coating includes a carbon-based material, a binder may not be included. In some embodiments, for wet coating, a composition including a carbon-based conductive material and a binder may be coated on one side or opposite sides of an electrode collector. The composition may include, for example, a carbon-based conductive material, a binder, and a processing solvent. The carbon-based conductive material and the binder may be understood by referring to the electrode part described above. The processing solvent may be selected from solvents used in preparing the electrode slurry. The processing solvent may be removed by drying after the composition is coated on the electrode collector. The coating method may include spin coating, dip coating, etc., and is not limited thereto, and the coating method may be any coating method used in the art.

Next, the dry anode film may be disposed simultaneously or sequentially on one side or opposite sides of the current collector, thereby preparing a dry anode.

Pressing may be further performed during and/or after placing the dry anode film on one side or opposite sides of the electrode collector.

The pressing may be, for example, a roll press, a flat press, or the like, but is not necessarily limited thereto. The pressure during pressing may be, for example, about 1.0 ton/cm to about 10.0 ton/cm. If the pressure during pressing is excessively increased, the electrode current collector may crack. If the pressure during pressing is too low, the binding force between the current collector and the dry anode film may be lowered.

The lithium battery is manufactured by the following example method, but embodiments of the present disclosure are not necessarily limited to this method and the method may vary according to required conditions.

First, one or both of a cathode and an anode may be manufactured according to the dry anode manufacturing method described above. In some embodiments, if one of the cathode and the anode is manufactured by using the electrode preparation method, and the other electrode may be manufactured by the wet manufacturing method. For example, the other electrode may be prepared by preparing an electrode slurry including an electrode active material, a conductive material, a binder, and a solvent, coating the prepared electrode slurry on an electrode current collector, and drying the electrode slurry. The conductive material and binder included in the wet-manufactured electrode may be selected from the conductive materials and binders used in the manufacture of the dry anode.

Next, a separator to be inserted between the cathode and the anode may be prepared.

The providing a dry anode film may include preparing a dry mixture by dry mixing a dry anode active material as described above and a dry binder, and molding the dry mixture to prepare a dry anode film.

The dry anode active material may be formed in a process of dry mixing the core and the composite.

The composite may include at least one first metal oxide; and a first carbon-based material, wherein the first metal oxide is disposed in a matrix of the first carbon-based material, wherein the first metal oxide may be represented by the formula $M_aO_b$ ($0<a\leq3$, $0<b<4$, wherein a is 1, 2, or 3, and b may not be an integer), wherein M may be at least one metal selected from Group 2 to Group 16 of the Periodic Table of Elements.

The providing the composite includes, for example, providing a composite by supplying a reaction gas consisting of a carbon source gas to a structure including metal oxide and performing a heat treatment. The providing of a composite may include, for example, providing a composite by supplying a reaction gas consisting of a carbon source gas to at least one second metal oxide represented by $M_aO_c$ ($0<a\leq3$ and $0<c\leq4$, wherein if a is 1, 2, or 3, b may be an integer) and conducting a heat-treatment, wherein M may be at least one metal selected from elements of Groups 2 to 13, Group 15, and Group 16 of the Periodic Table of Elements.

The carbon source gas may be a gas consisting of a compound represented by Formula 10, or at least one gas mixture selected from a compound represented by Formula 10, a compound represented by Formula 11, and an oxygen-containing gas represented by Formula 12:

Formula 10 $\quad\quad\quad$ $C_nH_{(2n+2-a)}[OH]_a$

wherein, in Formula 10, n may be 1 to 20 and a may be 0 or 1;

Formula 11 $\quad\quad\quad$ $C_nH_{2n}$

wherein, in Formula 11, n may be 2 to 6;

Formula 12            $C_xH_yO_z$

[299] wherein, in Formula 12, x may be 0 or an integer from 1 to 20, y may be 0 or an integer from 1 to 20, and z is 1 or 2.

The compound represented by Formula 10 and the compound represented by Formula 11 may be at least one selected from the group consisting of methane, ethylene, propylene, methanol, ethanol, and propanol. The oxygen-containing gas represented by Formula 12 may include, for example, carbon dioxide ($CO_2$), carbon monoxide (CO), water vapor ($H_2O$), or a mixture thereof.

After the supplying of a reaction gas consisting of a carbon source gas to a second metal oxide represented by $M_aO_c$ (0<a≤3 and 0<c≤4, and if a is 1, 2, or 3, c may be an integer) and performing a heat treatment, there may be a cooling process further performed using at least one inert gas selected from nitrogen, helium, and argon. The cooling refers to adjusting to room temperature (20 °C to 25 °C). The carbon source gas may include at least one inert gas selected from nitrogen, helium, and argon.

In the method of preparing a composite, the process of growing a carbon-based material, for example, graphene, may be carried out under various conditions depending on a gas-phase reaction.

According to a first condition, for example, methane may be first supplied to a reactor loaded with a second metal oxide represented by $M_aO_c$ (0<a≤3 and 0<c≤4, and if a is 1, 2, or 3, c may be an integer), before elevating the temperature to a heat treatment temperature (T). The heating time to the heat treatment temperature (T) may be about 10 minutes to about 4 hours, and the heat treatment temperature (T) may be in the range of about 700 °C to about 1100 °C. At the heat treatment temperature (T), the heat treatment may be carried out for the duration of a reaction time. The reaction time may be, for example, 4 hours to 8 hours. The thermally treated product may be cooled to room temperature to produce a composite. The time spanning the process of cooling from the heat treatment temperature (T) to room temperature is, for example, about 1 hour to about 5 hours.

According to a second condition, for example, hydrogen may be first supplied to a reactor loaded with a second metal oxide represented by $M_aO_c$ (0<a≤3 and 0<c≤4, wherein if a is 1, 2, or 3, c may be an integer), before elevating the temperature to a heat treatment temperature (T). The heating time to the heat treatment temperature (T) may be about 10 minutes to about 4 hours, and the heat treatment temperature (T) may be in the range of about 700 °C to about 1100 °C. After performing a heat treatment for the duration of a reaction time at the heat treatment temperature (T), methane gas may be supplied and the heat treatment may be carried out for the remainder of the reaction time. The reaction time may be, for example, 4 hours to 8 hours. The thermally treated product may be cooled to room temperature to produce a composite. Nitrogen may be supplied during the process of cooling. The time spanning the process of cooling from the heat treatment temperature (T) to room temperature may be, for example, about 1 hour to about 5 hours.

According to a third condition, for example, hydrogen may be first supplied to a reactor loaded with a second metal oxide represented by $M_aO_c$ (0<a≤3 and 0<c≤4, wherein if a is 1, 2, or 3, c may be an integer), before elevating the temperature to a heat treatment temperature (T). The heating time to the heat treatment temperature (T) may be about 10 minutes to about 4 hours, and the heat treatment temperature (T) may be in the range of about 700 °C to about 1100 °C. After performing a heat treatment for the duration of a reaction time at the heat treatment temperature (T), a mixed gas of methane and hydrogen may be supplied and the heat treatment may be carried out for the remainder of the reaction time. The reaction time may be, for example, 4 hours to 8 hours. The thermally treated product may be cooled to room temperature to produce a composite. Nitrogen may be supplied during the process of cooling. The time spanning the process of cooling from the heat treatment temperature (T) to room temperature is, for example, about 1 hour to about 5 hours.

If the carbon source gas includes water vapor in the process of producing the composite, the composite with excellent conductivity may be obtained. The amount of water vapor in the gas mixture is not limited, and may be, for example, about 0.01 vol% to about 10 vol% based on 100 vol% of the total carbon source gas. For example, the carbon source gas may be: methane; a mixed gas including methane and an inert gas; or a mixed gas including methane and an oxygen-containing gas.

For example, the carbon source gas may be: methane; a mixed gas of methane and carbon dioxide; or a mixed gas of methane, carbon dioxide and water vapor. In the mixed gas of methane and carbon dioxide, the molar ratio of methane and carbon dioxide may be about 1:0.20 to about 1:0.50, about 1:0.25 to about 1:0.45, or about 1:0.30 to about 1:0.40. The molar ratio of methane, carbon dioxide and water vapor in the mixed gas of methane, carbon dioxide and water vapor may be about 1:0.20 to about 0.50:0.01 to 1.45, about 1:0.25 to 0.45:0.10 to about 1.35, or about 1:0.30 to 0.40:about 0.50 to 1.0 am.

The carbon source gas may be, for example, carbon monoxide or carbon dioxide. The carbon source gas may be, for example, a mixed gas of methane and nitrogen. The molar ratio of methane and nitrogen in the mixed gas of methane and nitrogen may be about 1:0.20 to about 1:0.50, about 1:0.25 to about 1:0.45, or about 1:0.30 to about 1:0.40. The carbon source gas may not include an inert gas such as nitrogen.

A heat treatment pressure may be selected in consideration of a heat treatment temperature, the composition of a gas mixture, a desired amount of carbon coating, and the like. The heat treatment pressure may be controlled by adjusting the incoming amount of a gas mixture and the outgoing amount of a gas mixture. The heat treatment pressure may be, for example, at least 0.5 atm, at least 1 atm, at least 2 atm, at least 3 atm, at least 4 atm, at least or 5 atm. The heat treatment pressure may be, for example, about 0.5 atm to about 10 atm, about 1 atm to about 10 atm, about 2 atm to about 10 atm, about 3 atm to about 10 atm, about 4 atm to about 10 atm, about or 5 atm to about 10 atm.

A heat treatment time is not limited and may be appropriately adjusted according to a heat treatment temperature, a heat treatment pressure, the composition of a gas mixture, and a desired amount of carbon coating. For example, the reaction time at the heat treatment temperature may be, for example, about 10 minutes to about 100 hours, about 30 minutes to about 90 hours, or about 50 minutes to about 40 hours. For example, as the heat treatment time is increased, the amount of carbon deposited, for example, the amount of graphene (carbon) is increased, and thus the electrical properties of the composite may be improved. It should be noted that this trend may not necessarily be directly proportional to time. For example, After a certain period of time, carbon deposition, for example, graphene deposition may no longer occur or the deposition rate may decrease.

Through the gas-phase reaction of the carbon source gas, even at relatively low temperatures, a composite may be obtained by providing a uniform coating of the carbon-based material, for example, graphene, on one or more selected from the second metal oxide represented by $M_aO_c$ ($0 < a \leq 3$ and $0 < c \leq 4$ where if a is 1, 2, or 3 and c may be an integer) and a reduction product thereof, for example, the first metal oxide represented by $M_aO_b$ ($0 < a \leq 3$ and $0 < b < 4$ where if is 1, 2, or 3, and b may not be an integer).

The composite may include, for example, a matrix of a carbon-based material, for example, a graphene matrix, which has at least one structure selected from a spherical structure, a spiral structure having a plurality of spherical structures connected to one another, a cluster structure having a plurality of spherical structures agglomerated, and a sponge structure; and at least one selected from a first metal oxide represented by $M_aO_b$ ($0<a\leq3$, $0<b<4$, wherein a is 1, 2, or 3, and b is not an integer) and a second metal oxide represented by $M_aO_c$ ($0<a\leq3$, $0<c\leq4$, if a is 1, 2, or 3, c may be an integer), disposed within the matrix of graphene.

The content of the dry binder may be about 1 wt% to about 10 wt%, about 1 wt% to about 5 wt%, about 1.5 wt% to about 3.5 wt%, or about 1.5 wt% to about 3 wt%, based on 100 wt% of the total content of the core, the composite, and the dry binder.

The content of the composite including at least one selected from the first metal oxide and the first carbon-based material may be about 5 wt % or less based on the total weight of the dry cathode film.

Hereinafter, the disclosure will be described in more detail with reference to the following Examples and Comparative Examples. However, the following Examples are merely presented to exemplify the present disclosure, and the scope of the present disclosure is not limited thereto.

(Preparation of Composite)

Preparation Example 1: $Al_2O_3$@Gr Composite

$Al_2O_3$ particles (average particle diameter: about 20 nm) were disposed in the reactor, and then, the temperature inside the reactor was raised to 1000 °C at a temperature rise rate of about 23 °C/min under the condition that $CH_4$ was supplied into the reactor at about 300 sccm at 1 atm for about 30 minutes.

Subsequently, a heat treatment was performed while maintaining the above temperature for 7 hours. Subsequently, the supply of $CH_4$ was stopped and the temperature inside the reactor was then adjusted to room temperature (25 °C) to obtain a composite in which $Al_2O_3$ particles and the reduction product thereof, $Al_2O_z$($0<z<3$) particles, were embedded in graphene.

The amount of alumina included in the composite was 60 wt%.

Preparation Example 2: $Al_2O_3$@Gr Composite

A composite was prepared following the same process as Preparation Example 1, except that $Al_2O_3$ particles (average particle diameter: about 200 nm) were used instead of the $Al_2O_3$ particles (average particle diameter: about 20 nm).

Preparation Example 3: $SiO_2$@Gr composite

$SiO_2$ particles (average particle diameter: about 15 nm) were disposed in the reactor, and then, the temperature inside the reactor was raised to 1000 °C under the condition that $CH_4$ was supplied into the reactor at about 300 sccm at 1 atm for about 30 minutes.

Subsequently, a heat treatment was performed while maintaining the above temperature for 7 hours. The temperature inside the reactor was then adjusted to room temperature (20 °C to 25 °C) to obtain a composite in which $SiO_2$ particles and the reduction product thereof, $SiO_y$ (0<y<2) particles were embedded in graphene.

(Preparation of silicon-based anode active material)

Preparation Example 4

Flake Graphite (SFG6) (Timcal, AG) (particle diameter: 4 μm, specific surface area: 17m²/g), pitch, and silicon were wet-mixed at a weight ratio of 2:25:73 using isopropyl alcohol (IPA) as a solvent, and then, spray-dried. Subsequently, the dried product was carbonized at 900 °C to obtain a silicon-carbon composite (SCN) (D50: about 13 μm).

(Manufacture of lithium battery (full cell), and dry cathode)

Example 1: Dry anode film containing graphite, GB 0.5% and binder

(Manufacture of dry anode)

Graphite, which is the first anode active material, polytetrafluoroethylene (PTFE) as a dry binder, and the composite (GB) prepared in Preparation Example 1 were put into a blade mixer at a weight ratio of 97.5:2.0:0.5, and then subjected to a primary dry mixing at a speed of 1200 rpm for 10 minutes at 25 °C to prepare a first dry mixture in which the dry anode active material and dry binder were uniformly mixed.
Then, in order to allow the fiberization of the binder to proceed, the first mixture was additionally secondarily mixed at a rate of 5000 rpm at 25 °C for 20 minutes to prepare a second mixture. A separate solvent was not used in the preparation of the first mixture and the second mixture.
The prepared second mixture was put into an extruder and extruded to prepare a self-standing film of an anode active material layer in the form of a dry anode film. The pressure at the time of extrusion was 50 MPa. The dry anode film included a composite anode active material having a structure in which a shell containing a composite and/or the milling product thereof was coated on a graphite core.
A carbon layer, which is an interlayer, was disposed on one side of a copper thin film having a thickness of 12 μm to prepare a first stack in which the interlayer was disposed on one surface of a second cathode current collector.
The interlayer was prepared by coating a composition including a carbon conductive material (Danka black) and polyvinylidene fluoride (PVDF) on an aluminum thin film and then drying the same. The thickness of the interlayer disposed on one surface of the aluminum thin film was about 1 μm.
A dry anode film, which is a self-standing film of an anode active material layer, was disposed on the interlayer of the first stack, followed by pressing, thereby preparing an anode.

(Preparation of cathode)

A mixture of a $LiNi_{0.91}Co_{0.05}Al_{0.04}O_2$ (hereinafter referred to as NCA91) composite cathode active material, a carbon conductive agent (Denka Black), and polyvinylidene fluoride (PVdF) at a weight ratio of 96:2:2, was mixed with N-methylpyrrolidone (NMP) in an agate mortar to prepare slurry.
The slurry was bar-coated to a thickness of 40 μm on an aluminum current collector, dried at room temperature, dried again under a vacuum condition at 120 °C, and pressed to prepare a cathode.

(Manufacture of coin cells)

Coin cells were prepared using the cathode and anode prepared above, a polypropylene separator (Celgard 3510), and as an electrolyte, a solution in which 1.15 M $LiPF_6$, and 1.5 wt% of vinylene carbonate (VC) were dissolved in ethylene carbonate (EC) + ethyl methyl carbonate (EMC) + dimethyl carbonate (DMC) (2: 4: 4 volume ratio).

Example 2: Dry anode film including graphite, SCN, GB 0.5%, and binder

Graphite, which is the first anode active material, the silicon composite structure (SCN) used in Preparation Example 4, which is the second anode active material, polytetrafluoroethylene (PTFE), which is a dry binder, and the composite (GB) prepared in Preparation Example 1 were put into a blade mixer at a weight ratio of 81.5:15:3:0.5, and then subjected to primary dry mixing at 25 °C at a speed of 1200 rpm for 10 minutes, thereby preparing a first dry mixture in which a dry cathode active material, a dry conductive material, and a dry binder were uniformly mixed.

The dry anode film included a first composite anode active material in which a shell including a composite and/or a milling product thereof is coated on a graphite core, and a second composite anode active material in which a shell including a composite and/or a milling product thereof is coated on a SCN core.

Example 3

A coin cell was manufactured in the same manner as in Example 1, except that the anode was manufactured according to the following process.

(Manufacture of anode)

Graphite, which is the first anode active material, the silicon composite structure (SCN) used in Preparation Example 4, which is the second anode active material, polytetrafluoroethylene (PTFE), which is a dry binder, and the composite (GB) prepared in Preparation Example 1 were put into a blade mixer at a weight ratio of 40.5:7.5:1:0.2, and then subjected to primary dry mixing at 25 °C at a speed of 1200 rpm for 10 minutes, thereby preparing a first dry mixture in which a dry cathode active material, and a dry binder were uniformly mixed.

Then, in order to allow the fiberization of the binder to proceed, the first mixture was additionally secondarily mixed at a rate of 5000 rpm at 25 °C for 20 minutes to prepare a second mixture. A separate solvent was not used in the preparation of the first mixture and the second mixture.

The prepared second mixture was put into an extruder and extruded to prepare a self-standing film of an anode active material layer in the form of a first dry anode film. The pressure at the time of extrusion was 50 MPa. The dry anode film included a composite anode active material having a structure in which a shell containing a composite and/or the milling product thereof was coated on a graphite core.

Separately, a second dry anode film was prepared in the same manner as described above, except that, in the preparation of a second dry mixture for forming the second dry anode film, graphite, which is the first anode active material, the silicon composite structure (SCN) used in Preparation Example 4, which is the second anode active material, polytetrafluoroethylene (PTFE), which is a dry binder, and the composite (GB) prepared in Preparation Example 1 were changed at a weight ratio of 40.5: 7.5: 2: 0.3.

A carbon layer, which is an interlayer, was disposed on one side of a copper thin film having a thickness of 12 $\mu$m to prepare a first stack in which the interlayer was disposed on one surface of a second cathode current collector.

The interlayer was prepared by coating a composition including a carbon conductive material (Danka black) and polyvinylidene fluoride (PVDF) on an aluminum thin film and then drying the same. The thickness of the interlayer disposed on one surface of the aluminum thin film was about 1 $\mu$m.

The first dry anode film and the second dry anode film were sequentially disposed on the interlayer of the prepared first stack, and pressed to prepare a dry anode (copper thin film/interlayer (carbon layer)/first dry anode film/second dry anode film).

Example 4

A coin cell was manufactured in the same manner as in Example 2, except that the anode illustrated in FIG. 4C was manufactured according to the following process.

(Manufacture of dry anode)

Graphite, the silicon composite structure (SCN) used in Preparation Example 4, which is the second anode active material, polytetrafluoroethylene (PTFE), which is a dry binder, and the composite (GB) prepared in Preparation Example 1 were put into a blade mixer at a weight ratio of 40.75:15:2:0.3, and then subjected to primary dry mixing at 25 °C at a speed of 1200 rpm for 10 minutes, thereby preparing a first dry mixture in which a dry cathode active material, and a dry binder were uniformly mixed.

Then, in order to allow the fiberization of the binder to proceed, the first mixture was additionally secondarily mixed at a rate of 5000 rpm at 25 °C for 20 minutes to prepare a second mixture. A separate solvent was not used in the preparation of the first mixture and the second mixture.

The prepared second mixture was put into an extruder and extruded to prepare a self-standing film of an anode active material layer in the form of a first dry anode film. The pressure at the time of extrusion was 50 MPa. The dry anode film included a composite anode active material having a structure in which a shell containing a composite and/or the milling product thereof was coated on a graphite core.

Separately, a second dry anode film was prepared in the same manner as described above, except that, in the preparation of the first dry mixture, the weight ratio of graphite, which is the first anode active material, polytetrafluoroethylene (PTFE), which is the dry binder, and composite (GB) prepared in in Preparation Example 1 was changed to a weight ratio of 40.75: 1: 0.2.

A carbon layer, which is an interlayer, was disposed on one side of a copper thin film having a thickness of 12 $\mu$m to prepare a first stack in which the interlayer was disposed on one surface of a second cathode current collector.

The interlayer was prepared by coating a composition including a carbon conductive material (Danka black) and polyvinylidene fluoride (PVDF) on an aluminum thin film and then drying the same. The thickness of the interlayer disposed on one surface of the aluminum thin film was about 1 $\mu$m.

The first dry anode film and the second dry anode film were sequentially disposed on the interlayer of the prepared first stack, and pressed to prepare a dry anode (copper thin film/interlayer (carbon layer)/first dry anode film/second dry anode film).

Example 5

A coin cell was manufactured in the same manner as in Example 3, except that the anode illustrated in FIG. 4B was manufactured according to the following process.

(Manufacture of anode)

Graphite, which is the first anode active material, the silicon composite structure (SCN) used in Preparation Example 4, which is the second anode active material, polytetrafluoroethylene (PTFE), which is a dry binder, and the composite (GB) prepared in Preparation Example 1 were put into a blade mixer at a weight ratio of 40.5:7:1:0.2, and then subjected to primary dry mixing at 25 °C at a speed of 1200 rpm for 10 minutes, thereby preparing a first dry mixture in which a dry cathode active material, and a dry binder were uniformly mixed.

Then, in order to allow the fiberization of the binder to proceed, the first mixture was additionally secondarily mixed at a rate of 5000 rpm at 25 °C for 20 minutes to prepare a second mixture. A separate solvent was not used in the preparation of the first mixture and the second mixture.

The prepared second mixture was put into an extruder and extruded to prepare a first dry anode film in the form of a sheet of the self-standing film. The pressure at the time of extrusion was 50 MPa. The dry anode film included a composite anode active material having a structure in which a shell containing a composite and/or the milling product thereof was coated on a graphite core.

Separately, a second dry anode film was prepared in the same manner as described above, except that, in the preparation of a second dry mixture for forming the second dry anode film, graphite, which is the first anode active material, the silicon composite structure (SCN) used in Preparation Example 4, which is the second anode active material, polytetrafluoroethylene (PTFE), which is a dry binder, and the composite (GB) prepared in Preparation Example 1 were changed at a weight ratio of 40.5: 8: 2: 0.3.

A carbon layer, which is an interlayer, was disposed on one side of a copper thin film having a thickness of 12 $\mu$m to prepare a first stack in which the interlayer was disposed on one surface of a second cathode current collector.

The interlayer was prepared by coating a composition including a carbon conductive material (Danka black) and polyvinylidene fluoride (PVDF) on an aluminum thin film and then drying the same. The thickness of the interlayer disposed on one side of the aluminum thin film was about 1 $\mu$m.

The first dry anode film and the second dry anode film were sequentially disposed on the interlayer of the prepared first stack, and pressed to prepare a dry anode (copper thin film/interlayer (carbon layer)/first dry anode film/second dry anode film).

Comparative Example 1: Preparation of wet anode

(Manufacture of anode)

Graphite, which is the first anode active material, polytetrafluoroethylene (PTFE), which is a binder, and composite (GB) prepared in Preparation Example 1, which is a conductive material, were put into the blade mixer at a weight ratio of 96.5:3:0.5, and then 25 °C at the rate of 1200 rpm for 10 minutes, and water was added thereto and mixed to obtain an anode active material slurry.

The anode active material slurry was applied on copper foil, and then, a film was formed to a coating thickness of 20 $\mu$m using a doctor blade, dried in a vacuum at 130 °C for 3 hours, and then pressed to prepare an anode.

Comparative Example 2: Preparation of dry anode

A dry anode was prepared in the same manner as in Example 1, except that Denka Black was used instead of the composite prepared in Preparation Example 1 in the preparation of the first dry mixture.

Comparative Example 3: Preparation of dry anode

A dry anode was prepared in the same manner as in Example 2, except that in the preparation of the first dry mixture, only the silicon composite structure (SCN) used in Preparation Example 4 was used instead of graphite, which is the first anode active material, and the silicon composite structure (SCN) used in Preparation Example 4, which is the second anode active material.

Evaluation Example 1: Evaluation of tensile strength

For each of the dry anode films prepared in Examples 1-4 and Comparative Example 2-3, specimens (216 mm (Length) $\times$ 19 $\pm$ 0.5 mm (Width) $\times$ 3.18 $\pm$ 0.38 mm (Depth)) for measuring tensile strength according to ASTM D 638 were prepared. Tensile strength was measured by conducting a tensile strength test according to the ASTM D 638 method. The results of the measurement are shown in Table 1 below.

[Table 1]

| Classification | Tensile strength [kPa] | |
| --- | --- | --- |
| | Before pressing | After pressing |
| Example 1 | 630 | 1050 |
| Example 2 | 700 | 1090 |
| Example 3 | 1000 | 1500 |
| Example 4 | 800 | 1200 |
| Example 5 | 1100 | 1800 |
| Comparative Example 1 | 50 | 100 |
| Comparative Example 2 | 400 | 960 |
| Comparative Example 3 | 650 | 990 |

As shown in Table 1, the dry anode films of Examples 1 to 4 showed improved mechanical strength compared to the dry cathode film of Comparative Examples 2 and 3.
The dry anodes of Examples 1 and 2 were determined to be better than the dry anodes of Comparative Examples 1 and 2 because each component was more uniformly distributed, the binder was more uniformly distributed within the dry anode film, and the fibrillized binder more effectively bound the composite cathode active material.

Evaluation Example 2: Mixture resistance evaluation

For each of the dry anodes prepared in Examples 1 to 5 and Comparative Examples 1 to 3, the mixture resistance was measured using an electrode resistance measurement system (Hioki, RM2610) at 25 °C. The measurement results are shown in Table 3 below.
In an electrode resistance measurement system (Hioki, RM2610), a probe was disposed on the cathode so that the anode active material layer of the anode faces the probe, a constant current was passed through the surface of the anode active material layer, the volume resistivity of the anode active material layer was measured from the surface potential distribution, and the interfacial resistance between the anode active material layer and the anode current collector was measured. The volume resistivity of the anode active material layer was regarded as the mixture resistance of the anode active material layer.

Evaluation Example 3: Interfacial Resistance Evaluation

For each of the dry anodes prepared in Examples 1 to 5 and Comparative Examples 1 and 2, the interfacial resistance was measured using an electrode resistance measurement system (Hioki, RM2610) at 25 °C. The measurement results are shown in Table 2.
In an electrode resistance measurement system (Hioki, RM2610), a probe was disposed so that the anode active material layer of the anode faces the probe, a constant current was passed through the surface of the anode active material layer, the volume resistivity of the anode active material layer was measured from the surface potential distribution, and the interfacial resistance between the anode active material layer and the anode current collector was measured.

[Table 2]

| Classification | Mixture resistance [$\Omega$cm] | Interfacial resistance [$\Omega$cm$^2$] |
|---|---|---|
| Example 1 | 0.035 | 0.002 |
| Example 2 | 0.025 | 0.002 |
| Example 3 | 0.015 | 0.001 |
| Example 4 | 0.02 | 0.002 |
| Example 5 | 0.011 | 0.001 |
| Comparative Example 1 | 0.068 | 0.05 |
| Comparative Example 2 | 0.121 | 0.004 |
| Comparative Example 3 | 0.08 | 0.003 |

As shown in Table 2, the dry anode of Examples 1 to 5 had a reduced mixture resistance compared to the dry anode of Comparative Examples 1 to 3.

It can be seen that due to the inclusion of a composite anode active material in which the shell including the composite is uniformly disposed on a core, the dry anodes of Examples 1 to 5 had improved electronic and/or ionic conductivity.

The wet anode of Comparative Example 1 and the dry anodes of Comparative Examples 2 and 3 had reduced electronic conductivity and/or ion conductivity because they did not include the composite anode active material.

As shown in Table 2, the dry anode of Examples 1 to 5 had a reduced interfacial resistance compared to the dry anode of Comparative Examples 1 to 3.

Evaluation Example 4: Adhesion of electrode plate

Using an adhesive force measuring device (UTM, Instron), the dry anode specimens prepared in Examples 1 to 5 and Comparative Examples 1 to 3 were cut into 150 mm × 15 mm, and then, the electrodes were attached to double-sided adhesive tape, and the force of 90° dislocation was measured. Results are shown in Table 3.

[Table 3]

| Classification | Adhesion of electrode plate [gf/mm] |
|---|---|
| Example 1 | 3.5 |
| Example 2 | 4.0 |
| Example 3 | 5.9 |
| Example 4 | 4.8 |
| Example 5 | 6.8 |
| Comparative Example 1 | 2.95 |
| Comparative Example 2 | 1.47 |
| Comparative Example 3 | 2.8 |

As shown in Table 3, the wet anode of Comparative Example 1 showed improved electrode adhesion compared to the dry anode films of Comparative Examples 2 and 3, as shown in Table 3. However, it can be seen that the dry anode films of Examples 1 to 5 had improved electrode adhesion compared to the wet anode of Comparative Example 1 and the dry anode of Comparative Examples 2 and 3.

Evaluation Example 5: Evaluation of charge and discharge characteristics at room temperature (25 °C)

The lithium batteries prepared in Examples 1 to 5 and Comparative Examples 1 to 3 were charged with a constant current at 25 °C at a current of 0.1 C rate until the voltage reached 4.5 V (vs. Li), and then while the voltage of 4.5 V was maintained in a constant voltage mode, the cut-off was performed at a current of 0.02 C rate. Subsequently, discharge was performed at a constant current of 0.1 C rate until the voltage reached 2.75 V (vs. Li) during discharge (formation cycle).

The lithium batteries which had been subjected to the formation cycle were charged with a constant current at 25 °C at a current of 0.2 C rate until the voltage reached 4.5 V (vs. Li), and then while the voltage of 4.5 V was maintained in a constant voltage mode, the cut-off was performed at a current of 0.02 C rate. Subsequently, discharge was performed at a constant current of 0.2 C rate until the voltage reached 2.75 V (vs. Li) during discharge (1st cycle). This cycle was repeated (repeated 50 times) under the same conditions until the 50th cycle.

Throughout the charge-discharge cycles above, a rest period of 10 minutes was provided after each charge/discharge cycle. Some of the room temperature charge/discharge test results are shown in Table 4 below. The initial efficiency is defined by Equation 1 below, and the capacity retention rate is defined by Equation 2 below.

Initial efficiency [%] = [Discharge capacity in formation cycle / Charge capacity in formation cycle] × 100      Equation 1

<Equation 2> Capacity retention ratio [%] = [discharge capacity in 50th cycle/discharge capacity in 1st cycle] × 100      Equation 2

[Table 4]

| Classification | Initial efficiency (%) | Capacity retention ratio [%] |
|---|---|---|
| Example 1 | 86.2 | 93 |
| Example 2 | 84.5 | 93 |
| Example 3 | 85.1 | 94.5 |
| Example 4 | 85.5 | 96.8 |
| Example 5 | 85.8 | 98.9 |
| Comparative Example 1 | 86.4 | 90 |
| Comparative Example 2 | 79.2 | 82 |
| Comparative Example 3 | 78.2 | 56 |

As shown in Table 4, the lithium batteries of Examples 1 to 5 had improved lifetime characteristics compared to the lithium batteries of Comparative Examples 1 and 2.

This improved lifetime may be attributed to the inhibition of the formation of a solid electrolyte interface (SEI) on the surface and/or inside the anode active material by the composite coating, thereby suppressing the internal resistance of the lithium batteries.

Evaluation Example 6: XPS spectrum evaluation

XPS spectra were measured using a Qunatum 2000 (Physical Electronics) over time in the manufacturing process of the composite prepared in Preparation Example 1. Before the increase in temperature, after 1 minute, after 5 minutes, after 30 minutes, after 1 hour, and after 4 hours, XPS spectra of C 1s orbitals and Al 2p orbitals were measured for the samples. At the initial stage of the increase in temperature, only the Al 2p orbital peak appeared, and the C 1s orbital peak did not appear. After 30 minutes, the peak for the C 1s orbital appeared clearly, and the size of the peak for the Al 2p orbital was significantly decreased.

After 30 minutes, peaks for C 1s orbitals due to C-C bonding and C=C bonding due to the growth of graphene appeared clearly near 284.5 eV.

As the reaction time elapsed, the peak position of the Al 2p orbital shifted toward a lower binding energy (eV) as the oxidation number of aluminum was decreased.

Therefore, it was confirmed that as the reaction proceeds, graphene grows on the $Al_2O_3$ particles, and the reduction product of $Al_2O_3$, $Al_2O_x$ (0 <x<3) was produced.

Average contents of carbon and aluminum were measured through XPS analysis results in 10 regions of the composite sample prepared in Preparation Example 1. With respect to the measurement results, the deviation of aluminum content for each region was calculated. The variation in aluminum content was expressed as a percentage of the average value and was referred to as uniformity. The percentage of the average value of the variation of the aluminum content, for example, the uniformity of the aluminum content was 1%. Therefore, it was confirmed that alumina was uniformly distributed in the composite prepared in Preparation Example 1.

**Claims**

1. A dry anode film comprising: a dry anode active material; and a dry binder, wherein

   the dry anode active material comprises a composite anode active material including a core and a shell disposed along a surface of the core, the core comprises a carbon-based material, a mixture of a carbon-based material and a silicon-based active material, a composite of a carbon-based material and a silicon-based active material, or a combination thereof,
   the shell comprises a composite including at least one first metal oxide and a first carbon-based material,
   the at least one first metal oxide is disposed within a matrix of the first carbon-based material, wherein
   the at least one first metal oxide is represented by the formula $M_aO_b$ ($0<a\leq3$, $0<b<4$, wherein if a is 1, 2, or 3, b is not an integer), wherein M is at least one metal selected from Group 2 to Group 16 of the Periodic Table of the Elements.

2. The dry anode film as claimed in claim 1, wherein
   the dry anode film has a multi-layer structure of two or more layers.

3. The dry anode film as claimed in claim 1, wherein

   the dry anode film comprises a first dry anode film and a second dry anode film, and
   a content of a binder and a content of a composite of the first dry anode film are greater than a content of a binder and a content of a composite of the second dry anode film, respectively.

4. The dry anode film as claimed in claim 1, wherein

   the dry anode film is a self-standing film, and is free of a residual processing solvent, and
   the dry anode film has a tensile strength before pressing of 450 kPa or more, and has a tensile strength after pressing of 1000 kPa or more.

5. The dry anode film as claimed in claim 1, wherein
   a content of the composite is 5 wt% or less, based on the total weight of the dry anode film.

6. The dry anode film as claimed in claim 1, wherein

   metal included in the at least one first metal oxide is at least one metal selected from Al, Nb, Mg, Sc, Ti, Zr, V, W, Mn, Fe, Co, Pd, Cu, Ag, Zn, Sb, and Se, and
   the at least one first metal oxide is at least one selected from $Al_2O_z$($0<z<3$), $NbO_x$($0<x<2.5$), $MgO_x$($0<x<1$), $Sc_2O_z$ ($0<z<3$), $TiOy$($0<y<2$), $ZrOy$($0<y<2$), $V_2O_z$($0<z<3$), $WOy$($0<y<2$), $MnOy$($0<y<2$), $Fe_2O_z$($0<z<3$), $Co_3O_w$ ($0<w<4$), $PdO_x$($0<x<1$), $CuO_x$($0<x<1$), $AgO_x$($0<x<1$), $ZnO_x$($0<x<1$), $Sb_2O_z$($0<z<3$), and $SeO_y$($0<y<2$).

7. The dry anode film as claimed in claim 1, wherein

   the shell further comprises a second metal oxide,
   the second metal oxide is represented by the formula $M_aO_c$ ($0<a\leq3$, $0<c\leq4$, wherein if a is 1, 2, or 3, c is an integer),
   the second metal oxide comprises a same metal as the at least one first metal oxide, and
   c/a, which is a ratio of c to a of the second metal oxide, has a greater value than b/a, which is a ratio of b to a of the at least one first metal oxide, and the second metal oxide is disposed within a matrix of the first carbon-based material.

8. The dry anode film as claimed in claim 7, wherein

   the second metal oxide is selected from $Al_2O_3$, $NbO$, $NbO_2$, $Nb_2O_5$MgO, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, and $SeO_2$, and

the at least one first metal oxide is a reduction product of the second metal oxide.

9. The dry anode film as claimed in claim 1, wherein

the carbon-based material is crystalline carbon, amorphous carbon, or a combination thereof,
the crystalline carbon is at least one selected from natural graphite, artificial graphite, graphene, fullerene, and carbon nanotubes, and
the amorphous carbon is at least one selected from pitch carbon, soft carbon, hard carbon, mesophase pitch carbide, calcined coke, and carbon fiber.

10. The dry anode film as claimed in claim 1, wherein

the silicon-based active material is a silicon alloy, a silicon-containing structure, a silicon-containing compound, or a combination thereof,
the silicon-containing compound is $SiO_x$ (0<x<2), SiC, or a combination thereof, and
the silicon-containing structure comprises a silicon composite structure.

11. The dry anode film as claimed in claim 10, wherein
the silicon composite structure comprises: a silicon-carbon composite including silicon particles and a first carbon-based material; a silicon-carbon composite including a core and a third carbon-based material surrounding the core, wherein silicon particles and a second carbon-based material are mixed in the core; or a combination thereof.

12. The dry anode film as claimed in claim 1, wherein

the dry binder comprises a fibrillized binder,
the dry binder comprises a fluorine-based binder,
a glass transition temperature ($T_g$) of the dry binder is about 15 °C to about 100 °C, and
a content of the dry binder is about 0.1 wt% to about 5 wt%, based on the total weight of the dry anode film.

13. The dry anode film as claimed in claim 1, further comprising a dry conductive material, wherein

the dry conductive material comprises a carbon-based conductive material,
the carbon-based conductive material comprises a fibrous carbon-based material having an aspect ratio of 10 or more, a particulate carbon-based material having an aspect ratio of less than 10, or a combination thereof, and
a content of the dry conductive material is about 0.1 wt% to about 5 wt%, based on the total weight of the dry anode film.

14. A dry anode comprising:

an anode current collector; and
the dry anode film as claimed in any one of claims 1 to 13, disposed on one side or opposite sides of the anode current collector.

15. The dry anode as claimed in claim 14, wherein

the anode current collector comprises: a substrate; and an interlayer disposed between the substrate and the dry anode film, and
the interlayer comprises a carbon-based conductive material.

16. The dry anode as claimed in claim 14, wherein

the dry anode film comprises: a first dry anode film disposed adjacent to the anode current collector; and a second dry anode film disposed on the first dry anode film, and
a content of a composite and a content of a binder of the first dry anode film are greater than a content of a composite and a content of a binder of the second dry anode film, respectively.

17. The dry anode as claimed in claim 16, wherein

the first dry anode film comprises, as a core of a dry composite anode active material, a carbon-based material and a silicon-based active material,

the silicon-based active material comprises a silicon composite structure, the second dry anode film comprises a carbon-based material as a core of a dry composite anode active material, and

the content of the binder and the content of the composite of the first dry anode film are identical to or greater than the content of the binder and the content of the composite of the second dry anode film, respectively.

18. The dry anode as claimed in claim 14, wherein

the dry anode film comprises: a first dry anode film disposed adjacent to the anode current collector; and a second dry anode film disposed on the first dry anode film,

the first dry anode film comprises, as a core of a dry composite anode active material, a carbon-based material and a silicon-based active material,

the second dry anode film comprises, as a core of a dry anode active material, a carbon-based material and a silicon-based active material, the silicon-based active material of each of the first dry anode film and the second dry anode film comprises a silicon composite structure,

a content of a composite (GB) and a content of a binder of the first dry anode film are equal to or greater than a content of a composite and a content of a binder of the second dry anode film, respectively, and

a content of the carbon-based material and a content of the silicon-based active material of the first dry anode film are equal to or greater than a content of the carbon-based material and a content of the silicon-based active material of the second dry anode film, respectively.

19. A lithium battery comprising:

a cathode; an anode; and an electrolyte disposed between the cathode and the anode, wherein
the anode is the dry anode as claimed in claim 15,
the electrolyte comprises a liquid electrolyte, a solid electrolyte, a gel electrolyte, or a combination thereof, and
the solid electrolyte comprises an oxide-based solid electrolyte, a sulfide-based solid electrolyte, a polymer solid electrolyte, or a combination thereof.

20. The lithium battery of claim 19, wherein the cathode comprises a cathode current collector, the anode comprise an anode current collector, and the cathode current collector and anode current collector each comprises a base film and a metal layer disposed on one side or opposite sides of the base film, the base film comprises a polymer, and the polymer comprises polyethylene terephthalate (PET), polyethylene (PE), polypropylene (PP), polybutylene terephthalate (PBT), polyimide (PI), or a combination thereof, and the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.

FIG. 1

FIG. 2

100

10

21
22  20
23

# FIG. 3A

| |
|---|
| 20 |
| 20a |
| 20b |
| 4 |

200

# FIG. 3B

| |
|---|
| 20 |
| 30 |
| 20a |
| 20b |
| 4 |

200

# FIG. 4A

| |
|---|
| 20b: SECOND DRY ANODE FILM<br>(GRAPHITE, SCN, PTFE2, GB2) |
| 20a: FIRST DRY ANODE FILM<br>(GRAPHITE, SCN, PTFE1, GB1) |
| <u>30</u> |
| <u>20</u> |

# FIG. 4B

| |
|---|
| 20b: SECOND DRY ANODE FILM<br>(GRAPHITE, SCN2, PTFE2, GB2) |
| 20a: FIRST DRY ANODE FILM<br>(GRAPHITE, SCN1, PTFE1, GB1) |
| <u>30</u> |
| <u>20</u> |

FIG. 4C

| |
|---|
| 20b: SECOND DRY ANODE FILM<br>(GRAPHITE, PTFE2, GB2) |
| 20a: FIRST DRY ANODE FILM<br>(GRAPHITE, SCN, PTFE1, GB1) |
| <u>30</u> |
| <u>20</u> |

# FIG. 5

# FIG. 6

# FIG. 7

## INTERNATIONAL SEARCH REPORT

| | International application No. |
|---|---|
| | **PCT/KR2024/003348** |

| | |
|---|---|
| **A. CLASSIFICATION OF SUBJECT MATTER** | |

**H01M 4/133**(2010.01)i; **H01M 4/134**(2010.01)i; **H01M 4/36**(2006.01)i; **H01M 4/583**(2010.01)i; **H01M 4/48**(2010.01)i; **H01M 4/62**(2006.01)i; **H01M 4/04**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/133(2010.01); B82Y 40/00(2011.01); H01M 10/04(2006.01); H01M 10/052(2010.01); H01M 4/13(2010.01); H01M 4/1393(2010.01); H01M 4/58(2010.01); H01M 4/583(2010.01); H01M 4/62(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬전지(lithium battery), 건식 음극(dry anode), 건식 음극 활물질(dry anode active material), 코어(core), 쉘(shell), 탄소계 재료(carbon-based material), 실리콘계 활물질(silicon-based active material), 금속산화물(metal oxide)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2012-0081556 A (LG CHEM, LTD.) 19 July 2012 (2012-07-19)<br>See claims 1-3, 6-7, 13, 15 and 17; and paragraphs [0031], [0036], [0059] and [0067]-[0075]. | 1-20 |
| Y | KR 10-2022-0126129 A (SAMSUNG SDI CO., LTD.) 15 September 2022 (2022-09-15)<br>See claims 1, 8-11 and 17; and paragraphs [0048]-[0050], [0063], [0065]-[0066], [0081]-[0083] and [0143]. | 1-20 |
| Y | KR 10-2023-0017051 A (SAMSUNG SDI CO., LTD.) 03 February 2023 (2023-02-03)<br>See claims 1, 6 and 10; and paragraphs [0027]-[0029], [0035]-[0038], [0040] and [0113]-[0118]. | 3,10-11,16-18,20 |
| A | CN 114695894 A (HEBEI KUNTIAN NEW ENERGY CO., LTD.) 01 July 2022 (2022-07-01)<br>See entire document. | 1-20 |

| ✓ Further documents are listed in the continuation of Box C. | ✓ See patent family annex. |
|---|---|

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **21 June 2024** | **21 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/003348** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2010-0127433 A (KOKAM CO., LTD.) 06 December 2010 (2010-12-06)<br>See entire document. | 1-20 |
| A | KR 10-2014-0104067 A (SAMSUNG SDI CO., LTD.) 28 August 2014 (2014-08-28)<br>See entire document. | 1-20 |

Form PCT/ISA/210 (second sheet) (July 2022)

## INTERNATIONAL SEARCH REPORT
### Information on patent family members

International application No.

**PCT/KR2024/003348**

| Patent document cited in search report | | | Publication date (day/month/year) | Patent family member(s) | | | Publication date (day/month/year) |
|---|---|---|---|---|---|---|---|
| KR | 10-2012-0081556 | A | 19 July 2012 | CN | 103299459 | A | 11 September 2013 |
| | | | | CN | 103299459 | B | 15 June 2016 |
| | | | | EP | 2648252 | A2 | 09 October 2013 |
| | | | | EP | 2648252 | A4 | 04 January 2017 |
| | | | | EP | 2648252 | B1 | 24 April 2019 |
| | | | | KR | 10-1422650 | B1 | 24 July 2014 |
| | | | | US | 2013-0288106 | A1 | 31 October 2013 |
| | | | | US | 9083021 | B2 | 14 July 2015 |
| | | | | WO | 2012-096473 | A2 | 19 July 2012 |
| | | | | WO | 2012-096473 | A3 | 06 December 2012 |
| KR | 10-2022-0126129 | A | 15 September 2022 | CN | 115050921 | A | 13 September 2022 |
| | | | | EP | 4089763 | A1 | 16 November 2022 |
| | | | | JP | 2022-137005 | A | 21 September 2022 |
| | | | | JP | 7359883 | B2 | 11 October 2023 |
| | | | | US | 2022-0285680 | A1 | 08 September 2022 |
| KR | 10-2023-0017051 | A | 03 February 2023 | CN | 115692597 | A | 03 February 2023 |
| | | | | EP | 4135068 | A2 | 15 February 2023 |
| | | | | EP | 4135068 | A3 | 26 April 2023 |
| | | | | US | 2023-0089248 | A1 | 23 March 2023 |
| CN | 114695894 | A | 01 July 2022 | None | | | |
| KR | 10-2010-0127433 | A | 06 December 2010 | KR | 10-1105875 | B1 | 16 January 2012 |
| KR | 10-2014-0104067 | A | 28 August 2014 | CN | 103996826 | A | 20 August 2014 |
| | | | | EP | 2768049 | A1 | 20 August 2014 |
| | | | | EP | 2768049 | B1 | 07 August 2019 |
| | | | | JP | 2014-157817 | A | 28 August 2014 |
| | | | | JP | 6391244 | B2 | 19 September 2018 |
| | | | | KR | 10-1708363 | B1 | 20 February 2017 |
| | | | | US | 2014-0234714 | A1 | 21 August 2014 |
| | | | | US | 9105922 | B2 | 11 August 2015 |

Form PCT/ISA/210 (patent family annex) (July 2022)